# EUROPEAN PATENT APPLICATION

(11) **EP 2 991 328 A1**
(43) Date of publication of application: **02.03.2016**
(21) Application number: 15182791.2
(22) Date of filing: 27.08.2015
(51) Int. Cl.: H04M 1/725

(54) **DISPLAYING METHOD OF ELECTRONIC DEVICE AND ELECTRONIC DEVICE THEREOF**

(30) Priority: 01.09.2014 KR 20140115708
(71) Applicant: Samsung Electronics Co., Ltd., Gyeonggi-do 16677 (KR)
(72) Inventor: KIM, Ji-Hyun, Gyeonggi-do (KR); JEONG, Wook-Hyun, Gyeonggi-do (KR); KANG, Hye-Jin, Seoul (KR); KIM, Jee-Youn, Gyeonggi-do (KR); KIM, Hyun-Seok, Gyeonggi-do (KR); NA, Seok-Hee, Incheon (KR); SEO, Ha-Yang, Seoul (KR); YOU, Sun-Mi, Seoul (KR); LEE, Bo-Na, Seoul (KR); LIM, Dong-Hoe, Gyeonggi-do (KR); CHANG, Yoon-Cheung, Gyeonggi-do (KR); CHONG, Min-Woo, Seoul (KR); JEONG, Jun-Young, Seoul (KR); PARK, Ji-Hea, Seoul (KR); JEON, Yu-Jeong, Gyeonggi-do (KR)
(74) Representative: Jenkins, Richard Gavin

(57) **Abstract**

An operating method of an electronic device is provided. The method includes determining whether a present point in time corresponds to a predetermined period or event, obtaining a content associated with the predetermined period or event, and providing the content as at least a part of a user interface displayed on a user interface screen of the electronic device.

## Description

### BACKGROUND OF THE DISCLOSURE

### 1. Field of the Disclosure

The present disclosure relates generally to a method for an electronic device to execute displaying, and more particularly, to an electronic device that displays one or more background screens based on a predetermined time period.

### 2. Description of the Related Art

Various types of electronic devices, such as, a smart phone, a tablet PC, or the like, are widely utilized. An electronic device such as a smart phone or the like is equipped with a touch screen, and may display a user interface screen of various contents on the touch screen.

For example, the electronic device may display a lock screen wallpaper as a background screen for a locked state, and may display a message wallpaper or the like as a background screen for a messenger execution state.

The background screen displays a content by changing a content based on the present time, but does not show various contents appropriate for a predetermined event such as Christmas, a birthday, or the like.

### SUMMARY OF THE DISCLOSURE

The present disclosure has been made to address at least the above mentioned problems and/or disadvantages and to provide at least the advantages described below. According to an aspect of the present disclosure, there is provided a method for various types of electronic devices, such as a smart phone, a tablet Personal Computer (PC), or the like, to display various contents in a user interface screen, and an electronic device thereof are provided.

In accordance with an aspect of the present disclosure, there is provided an operating method of an electronic device. The method includes determining whether a present point in time corresponds to a predetermined period or event, obtaining a content associated with the predetermined period or event, and providing the content as at least a part of a user interface displayed on user interface screen of the electronic device.

In accordance with an aspect of the present disclosure, there is provided an electronic device. The electronic device includes a display module and a processor configured to control the display module, obtain a content associated with a predetermined period or event when a present point in time corresponds to the predetermined period or event, and provide the content as at least a part of a user interface displayed on a user interface screen of the electronic device.

In accordance with an aspect of the present disclosure, there is provided a non-transitory computer readable storage medium that stores a program for implementing a method that includes determining whether a present point in time corresponds to a predetermined period or event, obtaining a content associated with the predetermined period or event, and providing the content as at least a part of a user interface displayed on a user interface screen of the electronic device.

### BRIEF DESCRIPTION OF THE DRAWINGS

The above and other aspects, features, and advantages of the present disclosure will be more apparent from the following detailed description taken in conjunction with the accompanying drawings, in which:
FIG. 1A is a diagram illustrating a network environment including an electronic device, according to an embodiment of the present disclosure;
FIG. 1B is a diagram illustrating a configuration of a content interface, according to an embodiment of the present disclosure;
FIG. 2 is a diagram illustrating an electronic device, according to an embodiment of the present disclosure;
FIG. 3 is a flowchart illustrating a displaying method of an electronic device, according to an embodiment of the present disclosure;
FIGs. 4A-4D are diagrams illustrating background screens, according to an embodiment of the present disclosure;
FIGs. 5A-5C are diagrams illustrating background screens that display effects, according to an embodiment of the present disclosure;
FIGs. 6 and 7 are diagrams illustrating content sets, according to an embodiment of the present disclosure;
FIGs. 8A and 8B are diagrams illustrating a process in which an electronic device writes and shares a celebration card, according to an embodiment of the present disclosure;
FIG. 9 is a diagram illustrating a process in which an electronic device provides supplementary information associated with a predetermined period, according to an embodiment of the present disclosure;
FIG. 10 is a diagram illustrating a process in which an electronic device provides past information associated with a predetermined period, according to an embodiment of the present disclosure;
FIG. 11 is a diagram illustrating a process in which an electronic device reports, in advance, event information associated with a predetermined period, according to an embodiment of the present disclosure;
FIGs. 12A-12C are diagrams illustrating a process in which an electronic device displays event information associated with a predetermined period through management of a schedule, according to an embodiment of the present disclosure;
FIG. 13 is a diagram illustrating a process in which an electronic device writes and shares a celebration card, according to an embodiment of the present disclosure;
FIG. 14 is a diagram illustrating a process in which an electronic device displays a background screen by adding an effect to the background screen, according to an embodiment of the present disclosure;
FIGs. 15A-15D are diagrams illustrating a process in which an electronic device displays a touch state by adding a season-based effect to a background screen, according to an embodiment of the present disclosure;
FIGs. 16A-16D are diagrams illustrating a process in which an electronic device displays a charging state by adding a season-based effect to a background screen, according to an embodiment of the present disclosure;
FIGs. 17A-17D and FIGs. 18A-18D are diagrams illustrating message background screens displayed in an electronic device, according to an embodiment of the present disclosure;
FIG. 19 is a diagram illustrating a screen in which a birthday celebration animation is displayed in a quick panel in an electronic device, according to an embodiment of the present disclosure;
FIG. 20 is a diagram illustrating a screen in which a birthday celebration animation
is displayed on a home screen in an electronic device, according to an embodiment of the present disclosure; and

FIG. 21 is a diagram illustrating a greeting recognition function list recognizable by an electronic device, according to an embodiment of the present disclosure.

### DETAILED DESCRIPTION OF EMBODIMENTS OF THE PRESENT DISCLOSURE

Hereinafter, various embodiments of the present disclosure will be described with reference to the accompanying drawings.

The present disclosure is described in detail with reference to particular embodiments shown in the accompanying drawings. However, it should be understood that there is no intent to limit the present disclosure to the particular forms disclosed herein; rather, the present disclosure should be construed to cover all modifications, equivalents, and/or alternatives falling within the spirit and scope of the disclosure. In the description of the drawings, similar reference numerals may be used to designate similar elements.

As used herein the expressions "include", "may include" and other conjugates refer to the existence of a corresponding disclosed function, operation, or constituent element, and do not limit one or more additional functions, operations, or constituent elements. Further, as used herein, the terms "include", "have", and their conjugates denote a certain feature, numeral, step, operation, element, component, or a combination thereof, and should not be construed to exclude the existence of or a possibility of addition of one or more other features, numerals, steps, operations, elements, components, or combinations thereof.

Further, as used herein the expression "or" includes any or all combinations of words enumerated together. For example, the expression "A or B" or "at least A or/and B" may include A, may include B, or may include both A and B.

Expressions including ordinal numbers, such as "first" and "second," etc., may modify various elements. However, such elements are not limited by the above expressions. For example, the above expressions do not limit the sequence and/or importance of the elements. The above expressions are used merely for the purpose of distinguishing an element from the other elements. For example, a first user device and a second user device may indicate different user devices although both of them are user devices. For example, a first component element may be referred to as a second component element. Similarly, the second component element also may be referred to as the first component element.

When an element is referred to as being "coupled" or "connected" to any other element, it should be understood that not only the element may be coupled or connected directly to the other element, but also a third element may be interposed therebetween. Conversely, when an element is referred to as being "directly coupled" or "directly connected" to any other element, it should be understood that no element is interposed therebetween.

The terms as used herein merely describe a certain embodiment and are not intended to limit the present disclosure. As used herein, singular forms may include plural forms as well unless the context explicitly indicates otherwise. Further, all terms used herein, including technical and scientific terms, have the same meaning as commonly understood by those of skill in the art to which the present disclosure pertains. Such terms as those defined in a generally used dictionary are to be interpreted to have the meanings consistent with to the contextual meanings in the relevant field of art, and are not to be interpreted to have ideal or excessively formal meanings unless clearly defined herein.

In accordance with the present disclosure, an electronic device may be a device including a communication interface 106, which is described in greater detail below. The electronic device may, for example, include, but is not limited to, at least one of a smart phone, a tablet Personal Computer (PC), a mobile phone, a video phone, an e-book reader, a desktop PC, a laptop PC, a netbook computer, a Personal Digital Assistant (PDA), a Portable Multimedia Player (PMP), an MP3 player, a mobile medical device, a camera, a wearable device (e.g., a Head-Mount-Device (HMD) such as electronic glasses, electronic clothing, an electronic bracelet, an electronic necklace, an electronic appcessory, an electronic tattoo, or a smart watch), a television, a Digital Video Disk (DVD) player, an audio, a refrigerator, an air conditioner, a vacuum cleaner, an oven, a microwave oven, a washing machine, an air cleaner, a set-top box, a TV box (e.g., Samsung HomeSync^{®}, Apple TV^{®}, or Google TV^{®}), a game console, an artificial intelligence robot, a Television (TV), an electronic dictionary, an electronic key, a camcorder, medical equipment (e.g., a Magnetic Resonance Angiography (MRA) machine, a Magnetic Resonance Imaging (MRI) machine, a Computed Tomography (CT) scanner, or an ultrasonic machine), a navigation device, a Global Positioning System (GPS) receiver, an Event Data Recorder (EDR), a Flight Data Recorder (FDR), a vehicle infotainment device, electronic equipment for a ship (e.g., ship navigation equipment and a gyrocompass), avionics, security equipment, an industrial or home robot, a part of furniture or building/structure, an electronic board, an electronic signature receiving device, a projector, and various measuring instruments (e.g., a water meter, an electricity meter, a gas meter, or a wave meter). Each of the aforementioned devices may be a device including a communication function.

The electronic device may be a combination of one or more of the aforementioned various devices. Further, the electronic device may be a flexible device. Further, it will be apparent to those skilled in the art that the electronic device is not limited to the above-mentioned devices.

Hereinafter, an electronic device according to embodiments of the present disclosure will be described with reference to the accompanying drawings. The term "user" as used herein may indicate a person who uses an electronic device or a device (e.g., artificial intelligence electronic device) that uses an electronic device.

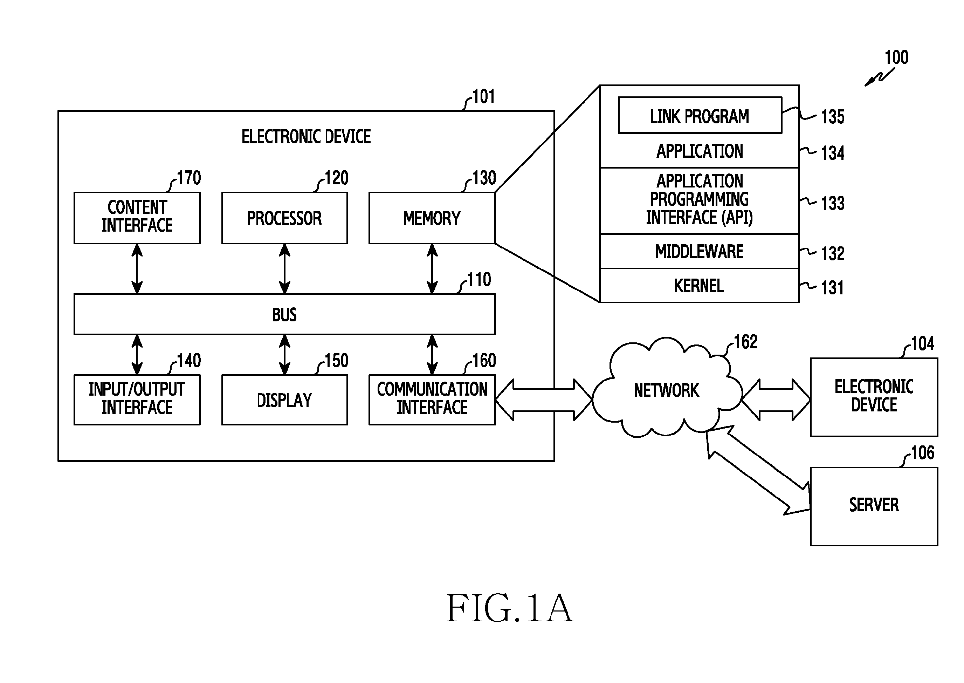

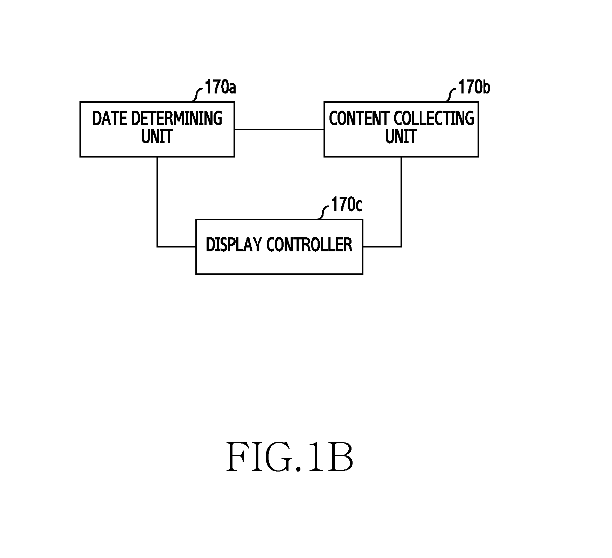

FIG. 1A is a diagram illustrating a network environment including an electronic device, , and FIG. 1B is a diagram illustrating a configuration of a content interface 170, according to the present disclosure.

Referring to FIG. 1A, the electronic device 101 includes at least one of a bus 110, a processor 120, a memory 130, an input/output interface 140, a display 150, a communication interface 160, and/or the content interface 170.

Referring to FIG. 1B, the content interface 170 includes a date determining unit 170a, a content collecting unit 170b, and a display controller 170c.

The content interface 170 is a component used for changing a lock screen background screen, which is a background screen used when the electronic device 101 is in a locked state and a message background screen, which is a background screen used when the electronic device 101 is in a messenger execution state, into a user interface screen (UI screen) of various contents associated with a predetermined period when the present point in time corresponds to a predetermined period such as a national holiday, a user's anniversary, or the like. The content interface 170 is used for displaying the lock screen background screen and the message background screen.

A part or the entirety of the content interface 170 may be included in the processor 120, or may work together with the processor 120 as a separate component.

The bus 110 may be a circuit that connects the aforementioned elements of FIGs. 1A and 1B to each other and transmits communication signals (for example, control messages) between the aforementioned elements.

The processor 120 may, for example, receive commands from the above-mentioned other elements (for example, the memory 130, the input/output interface 140, the display 150, and the communication interface 160) via the bus 110, interpret the received commands, and/or perform calculations or data processing according to the interpreted commands. One or more processors 120 may be included in the electronic device 101 to perform a predetermined function of the electronic device 101.

The processor 120 may include one or more Application Processors (APs) and one or more Micro Control Unit (MCUs). The processor 120 may include one or more microcontrollers as applications or may be functionally connected to one or more microcontrollers.

In FIG. 1A, the AP and the MCU may be included in one IC package, or may be separately configured to be included in different IC packages. The MCU may be included in an IC package of the AP to be configured as one IC package. Although the processor 120 has been described as including the AP or the MCU, the present disclosure is not so limited, as processor 120, AP, and MCU may be separate components that communicate with each other. It is to be understood that the processor 120 may also perform operations of the AP and/or the MCU.

The AP drives an operating system or an application program so as to control a plurality of hardware or execution of software components connected to the AP, and may processes various pieces of data including multimedia data and performs calculations. The AP may be implemented by, for example, a System on Chip (SoC). The processor 120 may further include a Graphic Processing Unit (GPU).

The MCU may be a processor that is configured to perform a predetermined operation. The MCU acquires sensing information through one or more specified motion sensors (for example, gyro sensor, acceleration sensor, or geomagnetic sensor), compares the acquired sensing information, and determines the operational state of the specified motion sensors with reference to a database of the electronic device 101.

The AP or the MCU loads a command or data received from at least one of a non-volatile memory or other components connected to each of the AP and the MCU in a volatile memory, and processes the loaded command or data. Further, the AP or the CP stores data received from or generated by at least one of the other components in a non-volatile memory.

The memory 130 stores commands or data received from or generated by the processor 120 or other components (for example, the input/output interface 140, the display 150, and the communication interface 160). The memory 130 includes programming modules, for example, a kernel 131, middleware 132, an Application Programming Interface (API) 133, applications 134, or the like. Each of the programming modules may be formed of software, firmware, or hardware, or a combination of two or more thereof.

The kernel 131 controls or manages the remaining programming modules, for example, system resources (for example, the bus 110, the processor 120, or the memory 130) used for executing operations or functions implemented in the middleware 132, the API 133, or the applications 134. Also, the kernel 131 provides an interface by which the middleware 132, the API 133, or the applications 134 may access individual components of the electronic device 101 to control or manage them.

The middleware 132 performs a relay function, which may allow the API 133 or the applications 134 to communicate with and exchange data with the kernel 131. Furthermore, with regard to task requests received from the applications 134, the middleware 132 performs a control (for example, scheduling or load balancing) for the task requests using, for example, a method of assigning a priority, by which the system resources (of the electronic device 101 may be preferentially used, to at least one of the applications 134.

The API 133 is an interface used by the applications 134 to control a function provided from the kernel 131 or the middleware 132. The API 133 may include, for example, at least one interface or function, for example, an instruction, for a file control, a window control, image processing, a character control, or the like.

The applications 134 may include a Short Message Service (SMS)/Multimedia Message Service (MMS) application, an e-mail application, a calendar application, an alarm application, a health care application (for example, an application for monitoring physical activity or blood glucose), and an environmental information application (for example, an application for providing atmospheric pressure, humidity, or temperature information). The application 134 may correspond to an application associated with information exchange between the electronic device 101 and an external electronic device (for example, the electronic device 104).

The application related to the information exchange may include, for example, a notification transmission application for transferring predetermined information to an external electronic device or a device management application for managing an external electronic device. The notification relay application may, for example, include a function of transferring, to an external electronic device (for example, the electronic device 104), notification information generated by other applications (for example, an SMS/MMS application, an e-mail application, a health management application, or an environmental information application) of the electronic device 101.

Additionally or alternatively, the notification relay application may receive notification information from, for example, the external electronic device 104 and provide the received notification information to a user. For example, the device management application may manage (for example, install, delete, or update) functions for at least a part of the external electronic device 104 communicating with the electronic device 101 (for example, turning on/off the external electronic device 104 (or some elements thereof) or adjusting the brightness (or resolution) of a display), applications operating in the external electronic device, or services (for example, a telephone call service or a message service) provided from the external electronic device 104.

The applications 134 may include an application designated according to attributes (for example, the type of electronic device) of the external electronic device 104. For example, when the external electronic device 104 is an MP3 player, the applications 134 may include an application related to the reproduction of music. Similarly, when the external electronic device 104 is a mobile medical appliance, the applications 134 may include an application related to health care.

The applications 134 may include at least one of an application designated to the electronic device 101 and an application received from the external electronic device 104. A link program 135 may be provided with or included in the applications 134, or may be stored in the memory 130 as a separate program. The link program 135 identifies a call inability state of a counterpart electronic device having received a call (for example, a call connection request) through the communication interface and transmits a call wish message to the counterpart electronic device. The link program 135 identifies the call inability state of the counterpart electronic device having transmitted the call based on at least one state of no answer of the counterpart electronic device, call connection rejection of the counterpart electronic device, abnormal call end after the counterpart electronic device accepts a call connection, and power off of the counterpart electronic device 102.

The link program 135 transmits the call wish message to the counterpart electronic device based on a user input. The link program 135 loads a call wish message transmission mode based on a user input. When the number of occurrences of the call inability state meets a predetermined number, the link program 135 transmits the call wish message to the counterpart electronic device.

The link program 135 may automatically determine the call wish message in accordance with a group designated to information of the counterpart electronic device. The link program 135 determines a call wish message selected from two or more provided messages or written based on a user input.

The link program 135 displays information on the transmission of the call wish message in call state information of at least one of the electronic device 101 and the counterpart electronic device. The link program 135 re-transmits the call wish messages for a predetermined number of times at a time interval designated to setting information. The link program 135 inserts at least some of the user profile set (e.g., information from the user profile) to the electronic device 101 into the call wish message.

The input/output interface 140 transfers a command or data input by a user through an input/output device (for example, various sensors such as an acceleration sensor and a gyro sensor and/or a device such as a keyboard or a touch screen) to the processor 120, the memory 130, the communication interface 160 through, for example, the bus 110. For example, the input/output interface 140 provides the processor 120 with data corresponding to a touch of the user received as input through a touch screen.

Further, the input/output interface 140 outputs a command or data, received from, for example, the processor 120, the memory 130, and/or the communication interface 160 via the bus 110, through an output unit (for example, a speaker or a display). For example, the input/output interface 140 outputs voice data processed by the processor 120 to the user through a speaker.

The display 150 displays various pieces of information (for example, multimedia data, text data or the like.) to a user. Further, the display 150 may include a touch screen for receiving a command through a touch or a proximity touch on the display by an input means.

The communication interface 160 establishes a communication connection between the electronic device 101 and an external device (for example, the electronic device 104 or the server 106). For example, the communication interface 160 may be connected to a network 162 through wireless communication or wired communication, and may communicate with an external device.

The wireless communication may include at least one of, for example, Wi-Fi^{®}, Bluetooth^{®} (BT), Near Field Communication (NFC), Global Positioning System (GPS^{®}) and cellular communication (for example Long Term Evolution (LTE), LTE-A, Code Division Multiple Access (CDMA), Wideband CDMA (WCDMA), Universal Mobile Telecommunication System (UMTS), Wireless Broadband (WiBro), or Global System for Mobile communication (GSM), etc.). The wired communication may include at least one of, for example, a Universal Serial Bus (USB), a High Definition Multimedia Interface (HDMI), a Recommended Standard 232 (RS-232), and a Plain Old Telephone Service (POTS).

The network 162 may be a communication network. The communication network may include at least one of a computer network, the Internet, the Internet of things, and a telephone network. A protocol (for example, a transport layer protocol, data link layer protocol, or a physical layer protocol) for communication between the electronic device 101 and the external device may be supported by at least one of the application 134, the application programming interface 133, the middleware 132, the kernel 131, and the communication interface 160.

The server 106 supports the driving of the electronic device 101 by performing at least one operation (or function) implemented in the electronic device 101. For example, the server 106 may include the processor 120 for controlling the electronic device 101 or a server module (for example, a server controller or a server processor), which can support a specific module configured to perform various embodiments.

For example, the server module may include at least one element of the processor 120 or the specific module to perform at least one operation of the operations performed by the processor 120 or the specific module (for example, perform the operation on behalf of the processor 120 or the specific module).

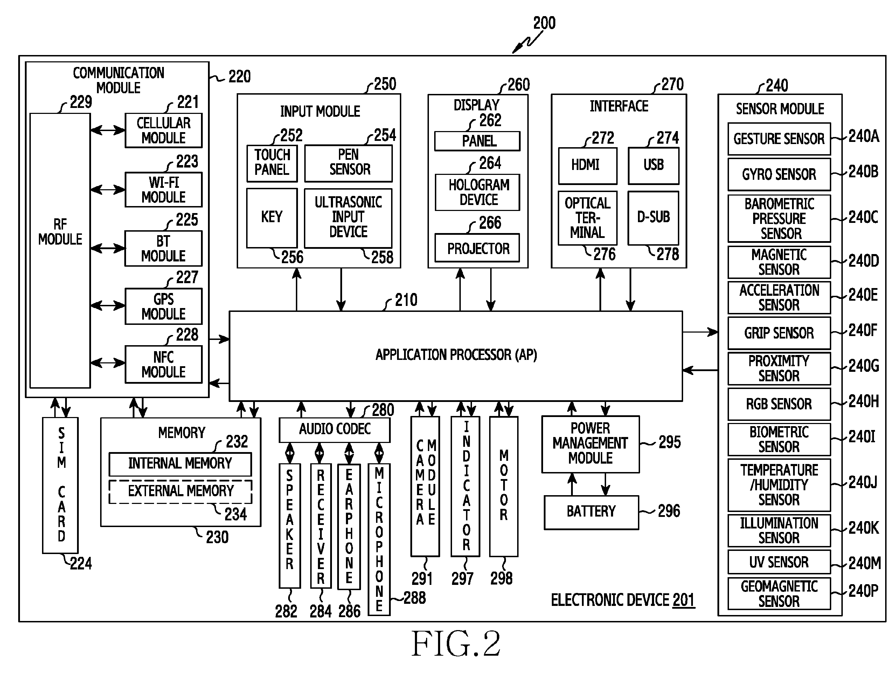

FIG. 2 is a diagram of an electronic device, according to an embodiment of the present disclosure. The electronic device 201 may constitute, for example, all or some of the electronic device 101 illustrated in FIG. 1A, or expand all or some of the components of the electronic device 101.

Referring to FIG. 2, the electronic device 201 includes at least one Application Processor (AP) 210, a communication module 220, a Subscriber Identifier Module (SIM) card 224, a memory 230, a sensor module 240, an input device 250, a display 260, an interface 270, an audio module 280, a camera module 291, a power management module 295, a battery 296, an indicator 297, and/or a motor 298.

One or more processors 210 may be included in the electronic device 201 to perform a predetermined function of the electronic device 201. The processor 210 may include one or more Application Processors (APs) and one or more Micro Control Units (MCUs). The processor 210 may include one or more microcontrollers as applications or may be functionally connected to one or more micro controllers.

As described above with reference to FIG. 1A, the AP and the MCU maybe included in one IC package, or may be separately configured to be included in different IC packages, respectively. Although the processor 210 includes the AP or the MCU in FIG. 2, the present disclosure is not so limited, as the processor 210 may also perform operations of the AP and/or the MCU.

The AP may drive an operating system or an application program so as to control a plurality of hardware or software components connected to the AP, and may process various pieces of data including multimedia data and perform calculations. The AP may be implemented by, for example, an SoC. The processor 210 may further include a GPU.

The MCU may be a processor configured to perform a predetermined operation. The MCU may acquire sensing information through one or more predetermined motion sensors (for example, a gyro sensor 240B, an acceleration sensor 240E, or a geomagnetic sensor 240P), compare acquired sensing information, and determine an operation state of the predetermined sensor (for example, the geomagnetic sensor 240P) with reference to a database of the electronic device 201.

Further, although the MCU and the components of the sensor module 240 are illustrated as separate components in FIG. 2, the MCU may be implemented to include at least some of the components of the sensor module 240 (for example, at least one of the gyro sensor 240B, the acceleration sensor 240E, and the geomagnetic sensor 240P). The AP or the MCU may load a command or data received from at least one of a non-volatile memory and other components connected to each of the AP and the MCU in a volatile memory, and may process the loaded command or data. Further, the AP or the CP may store data received from or generated by at least one of the other components in a non-volatile memory.

The communication module 220 performs data transmission/reception in communication between the electronic device 201 and other electronic devices (for example, the electronic device 104 or the server 106) connected thereto through the network 162. The communication module 220 may include a cellular module 221, a Wi-Fi^{®} module 223, a BT^{®} module 225, a GPS module 227, an NFC module 228, and/or a Radio Frequency (RF) module 229.

The cellular module 221 provides a voice, a call, a video call, a text message service, or an Internet service through a communication network (for example, LTE, LTE-A, CDMA, WCDMA, UMTS, WiBro, or GSM). Furthermore, the cellular module 221 distinguishes between and authenticates electronic devices within a communication network by using, for example, the SIM card 224. The cellular module 221 may perform at least some of the functions that the AP 210 may provide. For example, the cellular module 221 may perform at least some of the multimedia control functions.

The cellular module 221 may include a Communication Processor (CP). Furthermore, the cellular module 221 may be implemented by, for example, an SoC. Although the components such as the cellular module 221 (for example, the communication processor), the memory 230, and the power management module 295 are illustrated as components separated from the AP 210 in FIG. 2, the AP 210 may include at least some of the aforementioned components (for example, the cellular module 221).

The AP 210 or the cellular module 221 (for example, the communication processor) may load a command or data received from at least one of a non-volatile memory and other components connected thereto into a volatile memory and process the loaded command or data. Further, the AP 210 or the cellular module 221 may store data received from or generated by at least one of other components in a non-volatile memory.

For example, each of the Wi-Fi^{®} module 223, the BT^{®} module 225, the GPS module 227, and the NFC module 228 may include a processor for processing data transmitted/received through the corresponding module. Although the cellular module 221, the WiFi^{®} module 223, the BT^{®} module 225, the GPS module 227, and the NFC module 228 are illustrated as separate blocks in FIG. 2, at least some (for example, two or more) of the cellular module 221, the WiFi^{®} module 223, the BT^{®} module 225, the GPS module 227, and the NFC module 228 may be included in one IC or one IC package. For example, at least some (for example, the communication processor corresponding to the cellular module 221 and the WiFi^{®} processor corresponding to the WiFi^{®} module 223) of the processors corresponding to the cellular module 221, the WiFi^{®} module 223, the BT^{®} module 225, the GPS module 227, and the NFC module 228 may be implemented as one SoC.

The RF module 229 transmits/receives data, for example, RF signals. The RF module 229 may, for example, include a transceiver, a Power Amp Module (PAM), a frequency filter, a Low Noise Amplifier (LNA), or the like. Further, the RF module 229 may further include a component for transmitting/receiving electronic waves over a free air space in wireless communication, for example, a conductor, a conducting wire or the like. Although the cellular module 221, the Wi-Fi^{®} module 223, the BT^{®} module 225, the GPS module 227, and the NFC module 228 share one RF module 229 in FIG. 2, at least one of the cellular module 221, the Wi-Fi^{®} module 223, the BT^{®} module 225, the GPS module 227, and the NFC module 228 may transmit/receive an RF signal through a separate RF module in one embodiment.

The SIM card 224 may be inserted into a slot formed in a predetermined portion of the electronic device 201. The SIM card 224 may include unique identification information (for example, an integrated circuit card identifier (ICCID)) or subscriber information (for example, an International Mobile Subscriber Identity (IMSI)).

The memory 230 includes an internal memory 232 or an external memory 234. The internal memory 232 may include at least one of a volatile memory (for example, a Dynamic Random Access Memory (DRAM), a Static RAM (SRAM), a Synchronous Dynamic RAM (SDRAM), or the like) or a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a NAND flash memory, a NOR flash memory, or the like).

The internal memory 232 may be a Solid State Drive (SSD). The external memory 234 may further include a flash drive, for example, a Compact Flash (CF), a Secure Digital (SD), a Micro Secure Digital (Micro-SD), a Mini Secure Digital (Mini-SD), an extreme Digital (xD), a memory stick, or the like. The external memory 234 may be functionally connected to the electronic device 201 through various interfaces. The electronic device 201 may further include a storage device (or storage medium) such as a hard drive.

The sensor module 240 measures a physical quantity or senses an operation state of the electronic device 201 and converts the measured or sensed information into an electric signal. The sensor module 240 includes, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, an RGB sensor 240H, a biometric sensor 240I, a temperature/humidity sensor 240J, an illumination sensor 240K, an Ultra Violet (UV) sensor 240M, and the geomagnetic sensor 240P. Additionally or alternatively, the sensor module 240 may, for example, include an E-nose sensor, an electromyography (EMG) sensor, an electroencephalogram (EEG) sensor, an electrocardiogram (ECG) sensor, an Infrared (IR) sensor, an iris sensor, a fingerprint sensor, and the like. The sensor module 240 may further include a control circuit for controlling one or more sensors included therein.

The input device 250 includes a touch panel 252, a (digital) pen sensor 254, a key 256, or an ultrasonic input device 258. The touch panel 252 detects a touch input in at least one of, for example, a capacitive type, a resistive type, an infrared type, and an acoustic wave type. The touch panel 252 may further include a control circuit. The capacitive type touch panel may detect a physical contact or proximity. The touch panel 252 may further include a tactile layer. In this case, the touch panel 252 may provide a user with a tactile reaction.

The (digital) pen sensor 254 may be implemented by, for example, using a method identical or similar to a method of receiving a touch input of a user, or using a separate recognition sheet. The key 256 may include, for example, a physical button, an optical key, or a keypad. The ultrasonic input device 258 is a device is used to identify data by detecting an acoustic wave with a microphone (for example, a microphone 288) of the electronic device 201 through an input unit generating an ultrasonic signal, and may perform wireless detection. The electronic device 201 may also receive a user input from an external device (for example, a computer or server) connected thereto by using the communication module 220.

The display 260 includes a panel 262, a hologram device 264, or a projector 266. For example, the panel 262 may be a Liquid Crystal Display (LCD), an Active Matrix Organic Light Emitting Diode (AM-OLED), or the like. The panel 262 may be implemented to be, for example, flexible, transparent, or wearable. The panel 262 may be implemented by a single module together with the touch panel 252. The hologram device 264 projects a three dimensional image in the air by using an interference of light. The projector 266 displays an image by projecting light onto a screen. The screen may be located, for example, inside or outside the electronic device 201. The display 260 may further include a control circuit for controlling the panel 262, the hologram device 264, or the projector 266.

The interface 270 may include, for example, an HDMI 372, a USB 274, an optical interface 276, or a D-subminiature (D-sub) 278. The interface 270 may be included in, for example, the communication interface 160 illustrated in FIG. 1A. Additionally or alternatively, the interface 270 may include, for example, a Mobile High-definition Link (MHL) interface, a Secure Digital (SD) card/Multi-Media Card (MMC) interface, or an Infrared Data Association (IrDA) standard interface.

The audio module 280 may bidirectionally convert a sound and an electrical signal. At least some components of the audio module 280 may be included in, for example, the input/output interface 140 illustrated in FIG. 1A. The audio module 280 may process voice information input or output through, for example, a speaker 282, a receiver 284, earphones 286, or the microphone 288. The camera module 291 is used to photograph still and moving images, and may include one or more image sensors (for example, a front sensor or a rear sensor), a lens, an Image Signal Processor (ISP), or a flash (for example, an LED or a xenon lamp).

The power management module 295 manages power of the electronic device 201. Although not illustrated, the power management module 295 may include, for example, a Power Management Integrated Circuit (PMIC), a charger IC, or a battery gauge. The PMIC may be mounted within an integrated circuit or an SoC semiconductor. Charging methods may be classified into a wired charging method and a wireless charging method. The charger IC may charge a battery and may prevent an overvoltage or excess current from being induced or flowing from a charger.

The charger IC may include a charger IC for at least one of the wired charging and the wireless charging. Examples of the wireless charging may include magnetic resonance charging, magnetic induction charging, and electromagnetic charging, and an additional circuit such as a coil loop, a resonance circuit, and a rectifier may be added for the wireless charging.

The battery gauge may measure, for example, a residual quantity of the battery 296, and a voltage, a current, or a temperature during the charging. The battery 296 stores or generates electricity and supplies power to the electronic device 201 using the stored or generated electricity. The battery 296 may include, for example, a rechargeable battery or a solar battery.

The indicator 297 displays a specific state of the electronic device 201 or a part thereof (for example, the AP 210), for example, a boot-up state, a message state, or a state of charge (SOC). The motor 298 converts an electrical signal into a mechanical vibration. Although not illustrated, the electronic device 201 may include a processing device (for example, a GPU) for supporting mobile TV. The processing unit for supporting mobile TV may process, for example, media data pursuant to a certain standard of Digital Multimedia Broadcasting (DMB), Digital Video Broadcasting (DVB), or media flow.

Each of the above-described elements of the electronic device 201 may include one or more other components, and the name of a corresponding element may vary according to the type of the electronic device 201. The electronic device 201 may include at least one of the above-described elements and may exclude some of the elements or further include other additional elements. Further, some of the elements of the electronic device 201 may be coupled to form a single entity while performing the same functions as those of the corresponding elements before the coupling.

Also, according to various embodiments of the present disclosure, an electronic device includes a display module and a processor to control the display module, and the processor obtains a content associated with a predetermined period or event when the present point in time corresponds to the predetermined period, and provides the content as at least a part of a user interface.

Also, the processor obtains the content based on at least one of a user touch event, a charging state change event, and a text recognition event, and the content may include an animation providing an effect corresponding to the event.

Also, the predetermined period is at least one of a national or public holiday of a nation where the electronic device is located, an anniversary designated by a user of the electronic device, and an anniversary of a person included in contact information of the electronic device, and the predetermined period is designated by a user input of the electronic device or may be obtained based on at least one of calendar information, schedule information, and contact information included in the electronic device.

Also, the content includes at least one of a still image, an animation image, and a video to be displayed on a user interface screen. Also, the content further includes at least one of audio and an effect image, which is to be output together with the at least one of the still image, the animation image, and the video.

Also, the processor obtains the content associated with the predetermined period by searching for the content in the electronic device, or downloading the content from a server connected to the electronic device over a network.

Also, the processor displays the content as at least one of a lock screen background screen, a message background screen, a notification background screen, and a widget background screen, which is a user interface screen.

Also, at least one of the lock screen background screen, the message background screen, the notification background screen, and the widget background screen is displayed together with at least one of audio and an effect image included in the content.

Also, when predetermined text is detected by executing text recognition with respect to text transmitted or received between the electronic device and another electronic device while the message background screen is displayed, the processor displays, on the message background screen, an effect image associated with the predetermined text.

Also, when a user touch occurs while the lock screen background screen is displayed, the processor displays an effect image in response to the user touch, and when a charging state is changed while the lock screen background screen is displayed, the processor displays an effect image in response to the change of the charging state.

Also, the processor enters a schedule managing mode or a card writing mode based on a user input while one of the notification background screen and the widget background screen is displayed, and transmits a card written based on a user input in the card writing mode to a partner electronic device through a multimedia service or a social network service, and share the same. Hereinafter, a displaying method, which may be used by the electronic device 101 and the electronic device 201 will be described in detail.

As noted above, the electronic device may be various types of electronic devices such as a smart phone, a tablet Personal Computer (PC), etc., and may be configured, including some or the entirety of the components illustrated in FIGs. 1A-2.

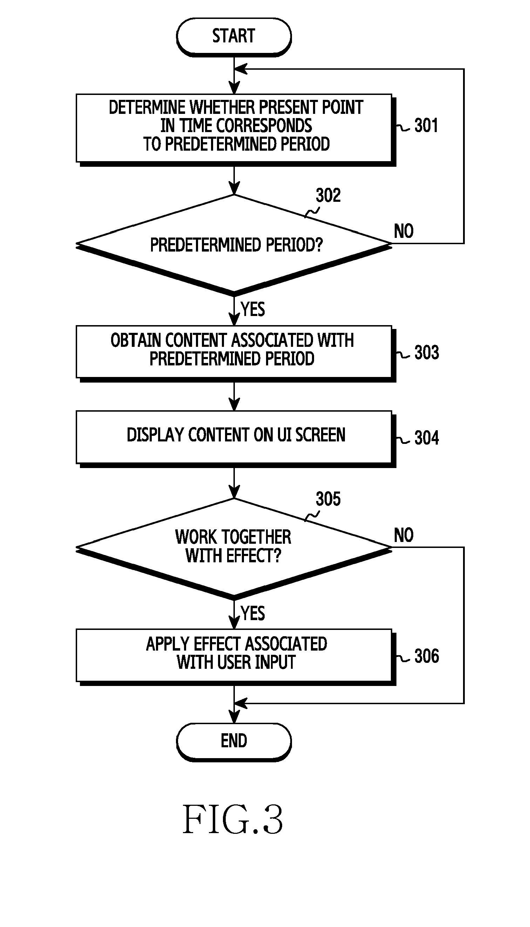

FIG. 3 is a flowchart illustrating a displaying method of an electronic device, according to an embodiment of the present disclosure. As described with reference to FIG. 1B, some or all of the date determining unit 170a, the content collecting unit 170b, and the display controller 170c included in the content interface 170 may be included in the processor 120 or may work together with the processor 120 as a separate component.

Referring to FIG. 3, the date determining unit 170a determines whether the present point in time corresponds to a predetermined period in step 301. For example, the date determining unit 170a determines whether the present point in time corresponds to a predetermined period, at a point in time (for example, 24:00:01) when a date that the electronic device counts is changed, determines whether the present point in time corresponds to a predetermined period, at a point in time when a user inputs the predetermined period as schedule information, or determines whether the present point in time corresponds to a predetermined period at intervals of a predetermined period set in advance.

The date determining unit 170a obtains the predetermined period, which is designated by a user input, or obtains the predetermined period from at least one of calendar information, schedule information, and contact information stored and managed in the electronic device.

For example, the predetermined period or event may be at least one of a national or public holiday of a nation where the electronic device is located, an anniversary designated by the user, and an anniversary of a person included in contact information included in the electronic device.

When the determination in step 302 shows that the present point in time corresponds to a predetermined period, the content collecting unit 170b obtains a content associated with the predetermined period in step 303. For example, the content may include at least one of a still image, an animation image, and a video to be displayed on a User Interface screen (UI screen), such as a lock screen background screen, a message background screen, and the like.

The content may further include at least one of audio (for example, a sound effect) and effect image (for example, a reaction-to-touch effect image, a charging state display image, and the like) to be output together with at least one of the still image, the animation image, and the video.

The content collecting unit 170b obtains the content associated with the predetermined period by searching for the content in the electronic device, or downloading the content from a server connected to the electronic device over a network. For example, when the predetermined period or event corresponds to Christmas, which is generally considered as a holiday around the world, and a content associated with Christmas is stored in the memory 130 of the electronic device, the content collecting unit 170b obtains the content from the memory 130 by searching for the content corresponding to Christmas.

When the predetermined period or event corresponds to, for example, the Dragon Boat day, which is a predetermined holiday of China, and a content associated with the Dragon Boat day is not stored in the memory 130 of the electronic device, the processor 120 accesses a content providing server that provides various contents through the Internet or the like, and obtains the content by downloading the content corresponding to the Dragon Boat day.

The display controller 170c displays the obtained content on a user interface screen in step 304. For example, when the electronic device is in a locked state, the display controller 170c selects a lock screen background screen included in the obtained content and displays the same as a background screen corresponding to a locked state, and when the electronic device is in a messenger execution state, the display controller 170c selects a message background screen included in the obtained content, and displays the same as a background screen corresponding to a messenger execution state.

When the content works together with an effect in step 305, the display controller 170c applies an effect associated with a user input in step 306. For example, when the predetermined period or event is Christmas, a lock screen background screen associated with Christmas may be an animation image including a Christmas tree, and an effect that works together with the lock screen background screen may be an effect in which snow comes down in response to a user touch input.

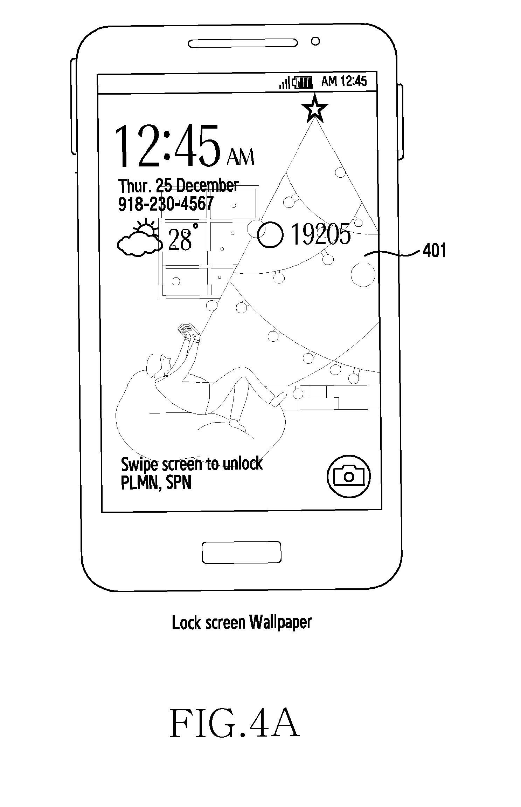

FIGs. 4A-4D are diagrams illustrating background screens, according to an embodiment of the present disclosure.

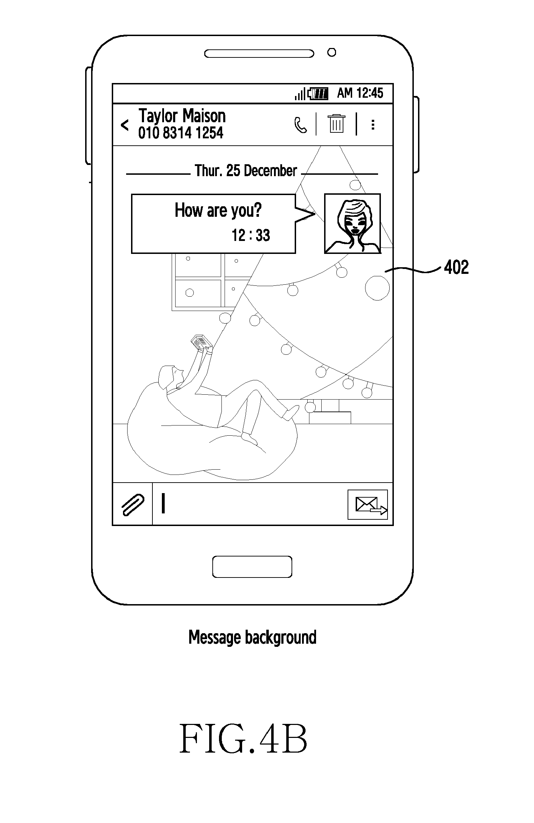

When the predetermined period or event is, for example, Christmas, the processor 120 displays an animation image including a Christmas tree or the like as a lock screen background screen 401 corresponding to a locked state (FIG. 4A), and displays the animation image including a Christmas tree as a message background screen 402 corresponding to a messenger execution state (FIG. 4B).

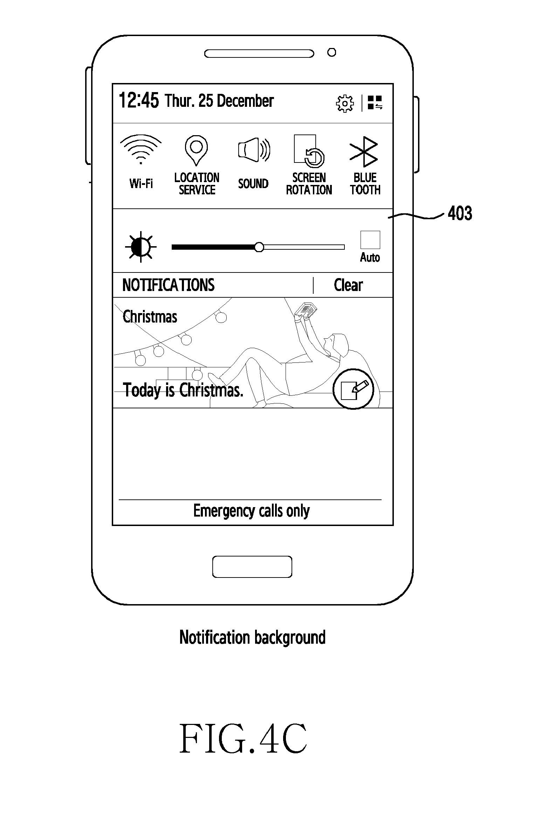

Also, the processor 120 extracts at least a part of the animation image including a Christmas tree as a notification background screen that is provided in an electronic device, such as a smart phone or the like, for convenience of a user, and displays the same in the notification background screen (FIG. 4C).

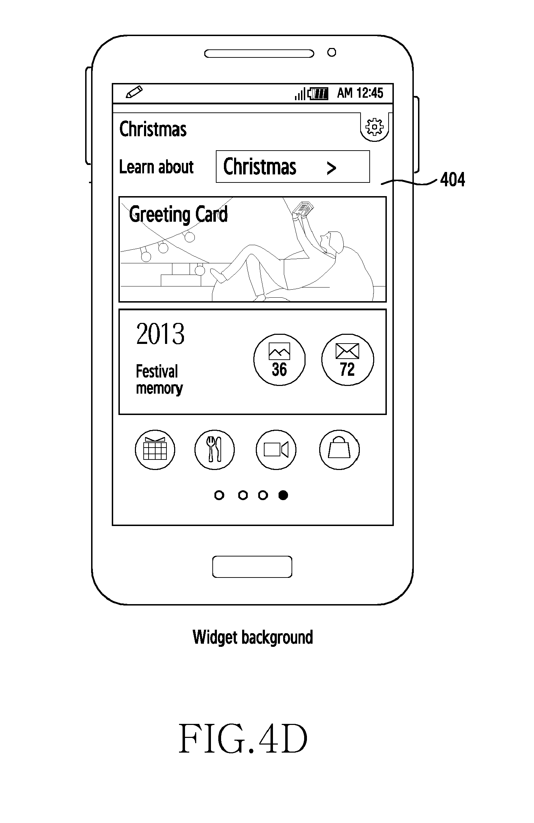

The processor 120 extracts at least a part of the animation image including a Christmas tree as various widget background screens 404, such as a widget for writing a greeting card (e.g., an electronic greeting card) or the like, and display the same in the widget background screen (FIG. 4D). In addition, the animation image including a Christmas tree or the like may be applied to various types of background screens and the like provided in the electronic device.

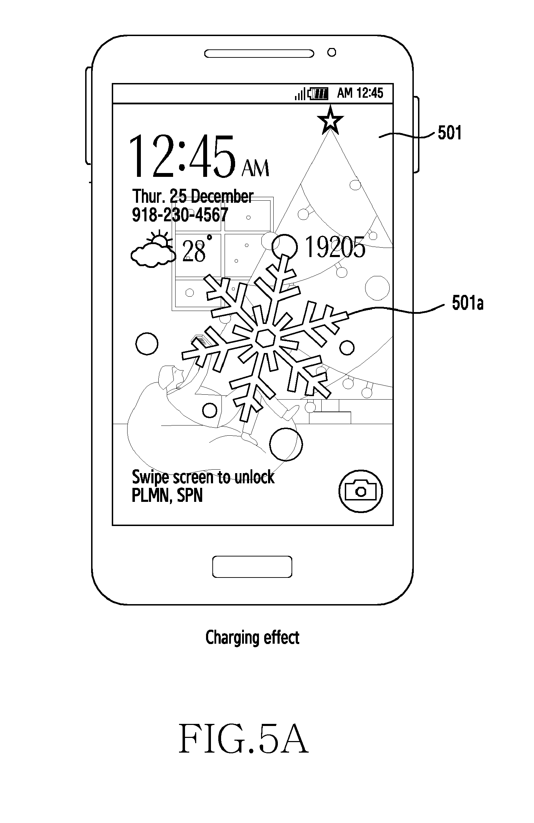

FIGs. 5A-5C are diagrams illustrating background screens that display effects, according to an embodiment of the present disclosure. When the predetermined period or event is, for example, Christmas, the processor 120 displays an animation image including a Christmas tree or the like as a lock screen background screen where a charging state is displayed, and a snow flake symbol image may be displayed in a lock screen background screen 501 where the charging state is displayed, as an effect image 501a that shows a charging state (FIG. 5A). For example, the snow flake symbol image may display an effect in which the parts of the snow flake are changed into different colors one by one as charging is executed.

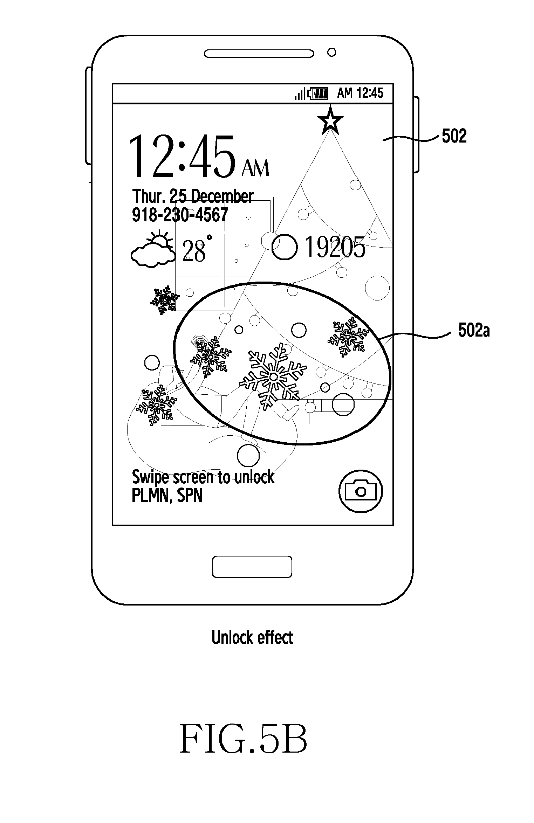

The processor 120 displays the animation image including a Christmas tree and the like as the lock screen background screen 502, and a snow falling image may be displayed in the lock screen background screen 502, as an effect image 502a that reacts to a user touch (FIG. 5B). For example, the snow falling image may display an effect in which snow is spread out according to a user touch direction or the like.

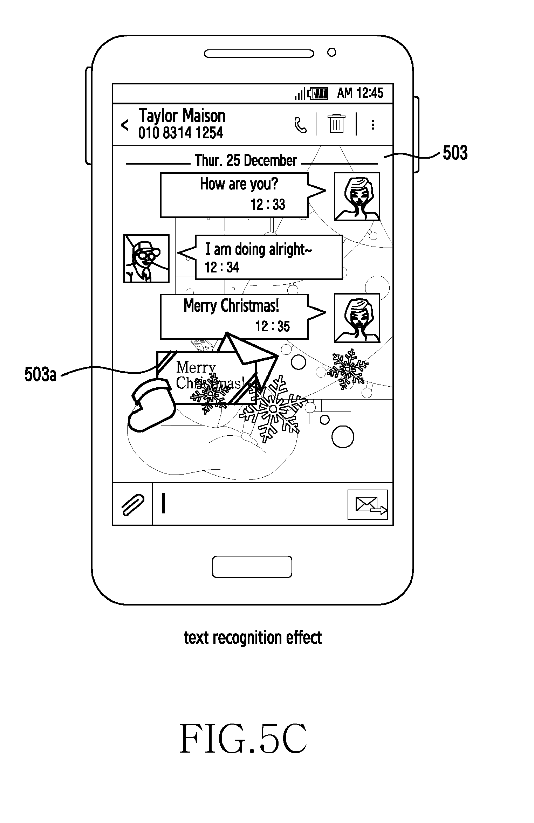

The processor 120 displays, for example, the animation image including a Christmas tree and the like as a message background screen 503, and the message background screen 503 recognizes text in a text message transmitted or received through a messenger and displays an effect image 503a such as a celebration message or the like (FIG. 5C). For example, when text associated with a Christmas celebration message is recognized as a result of text recognition with respect to a text message transmitted or received in real time, an effect such as a Christmas celebration card image or the like may be displayed.

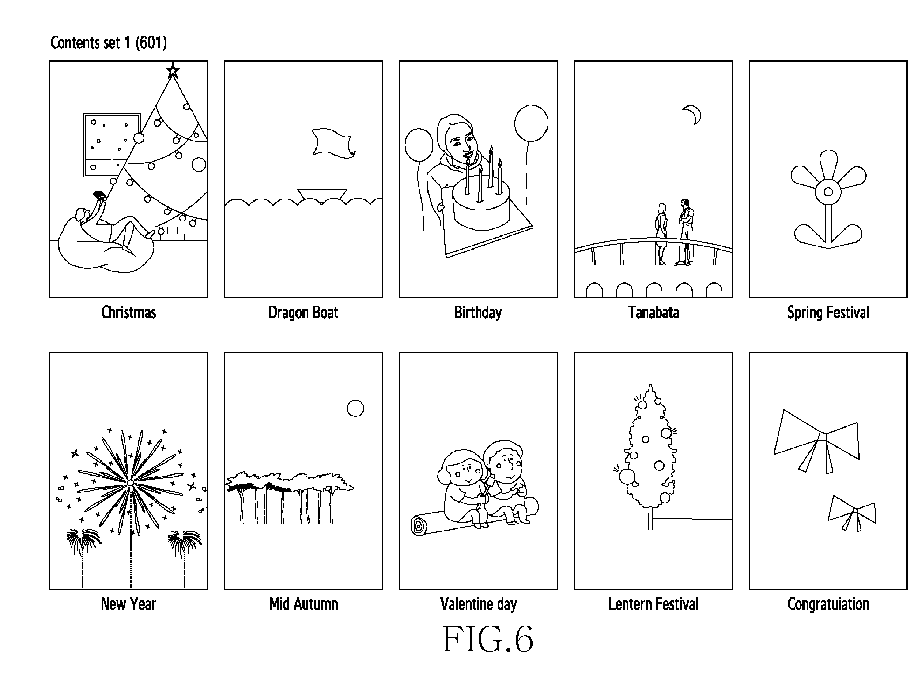

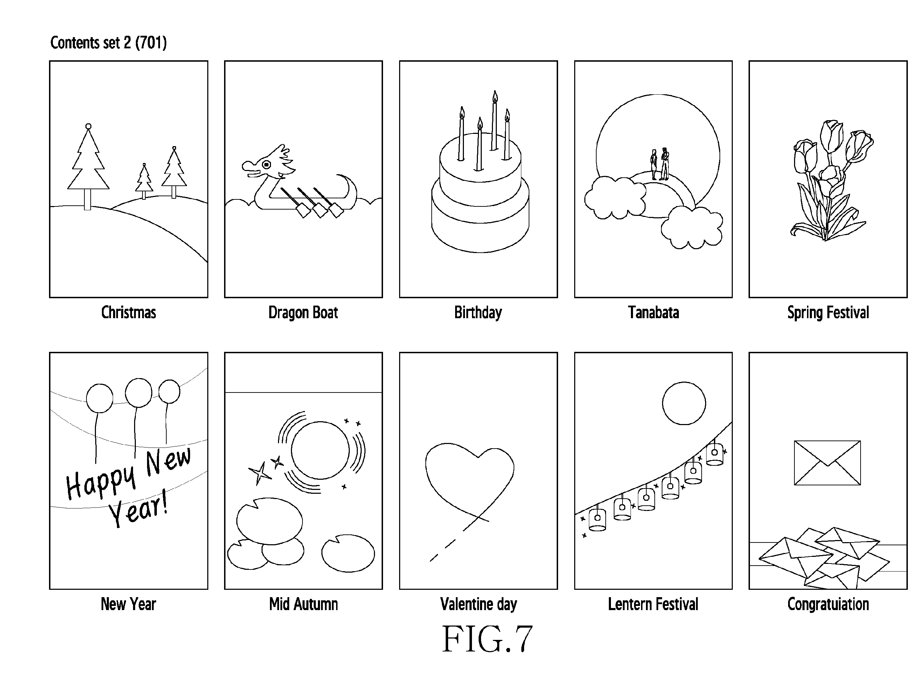

FIGs. 6 and 7 are diagrams illustrating content sets, according to an embodiment of the present disclosure. When the present point in time corresponds to a predetermined period or event such as a national holiday, a user's anniversary, or the like, the processor 120 obtains a content associated with the predetermined period by searching the memory 130 of the electronic device for the content, or downloading the content from a server connected over a network.

The content may be included in a set of contents respectively associated with a plurality of predetermined periods or events (hereinafter, a content set). For example, as illustrated in FIG. 6, a first content set 601 includes various different contents associated with predetermined periods or events, such as Christmas, the Dragon Boat day, a birthday, tanabata, a spring festival, the New Year, the Mid-Autumn, Valentine's Day, the lantern festival, congratulation, or the like.

As illustrated in FIG. 7, a second content set 701 includes contents associated with predetermined periods or events, such as Christmas, the Dragon Boat day, a birthday, tanabata, a spring festival, the New Year, the Mid-Autumn, Valentine's day, the lantern festival, congratulation, or the like, which are different from the first content set 601 of FIG. 6.

The processor 120 selects one of a plurality of content sets based on selection of a user or selects one of a plurality of contents based on a nation or a location where the electronic device currently is located. For example, when the nation where the electronic device is located is the U.S., the processor 120 automatically selects a content set including a content associated with a predetermined period such as Thanksgiving or the like. When the nation where the electronic device is located is China, the processor 120 automatically selects a content set including a content associated with a predetermined period such as the Dragon Boat day or the like.

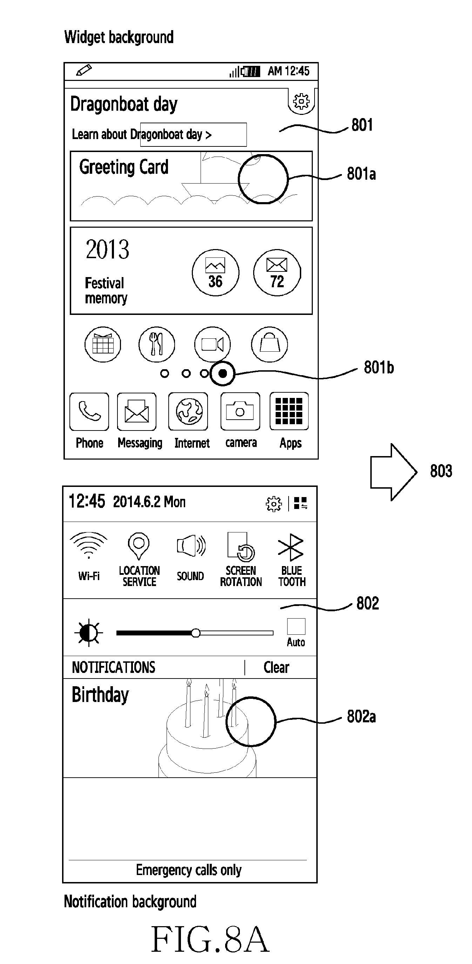

FIGs. 8A-8B are diagrams illustrating a process in which an electronic device writes and shares a celebration card, according to an embodiment of the present disclosure. When a user touches, for example, a predetermined part 801a on a widget background screen 801 or when a user touches a predetermined part 802a on a notification background screen 802, the processor 120 displays a template 803 in which various celebration cards are displayed in the form of thumbnail images (as in FIG. 8A).

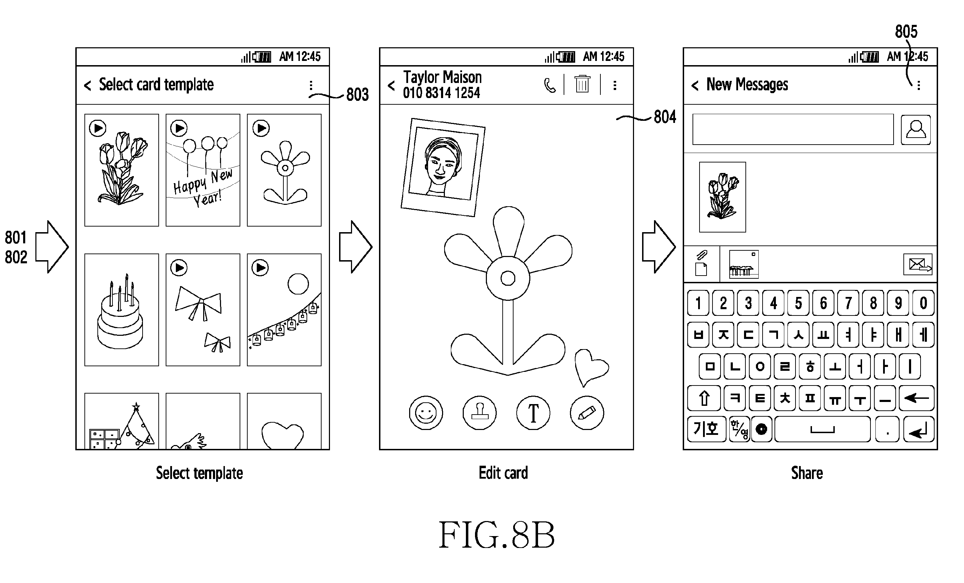

When a user selects a celebration card displayed in a reduced image in the template 803, the processor 120 displays a celebration card 804 of the selected reduced image in a large screen, and may edit text or the like included in the celebration card based on a user input (as in FIG. 8B).

The processor 120 transmits the edited celebration card to a user of another electronic device through a multimedia service (MMS), a social network service (SNS) 805, or the like, according to selection of the user, and may share the same.

An indicator 801b in a form of a point, indicating that a new page is generated by a content of the predetermined period, may be additionally displayed on the widget background screen 801 (as in FIG. 8A). When events overlap in the predetermined period, for example, when the present point in time corresponds to a national holiday and a user's birthday, the processor 120 prioritizes the user's birthday and displays a content associated with the user's birthday as various background screens.

The processor 120 displays various background screens based on a Picture In Picture (PIP) scheme that displays a content associated with the user's birthday as a main image and displays a content associated with the national holiday as a sub-image, or when the predetermined period is, for example, Chusok holidays or the like, the processor 120 displays a background screen of a content associated with the predetermined period.

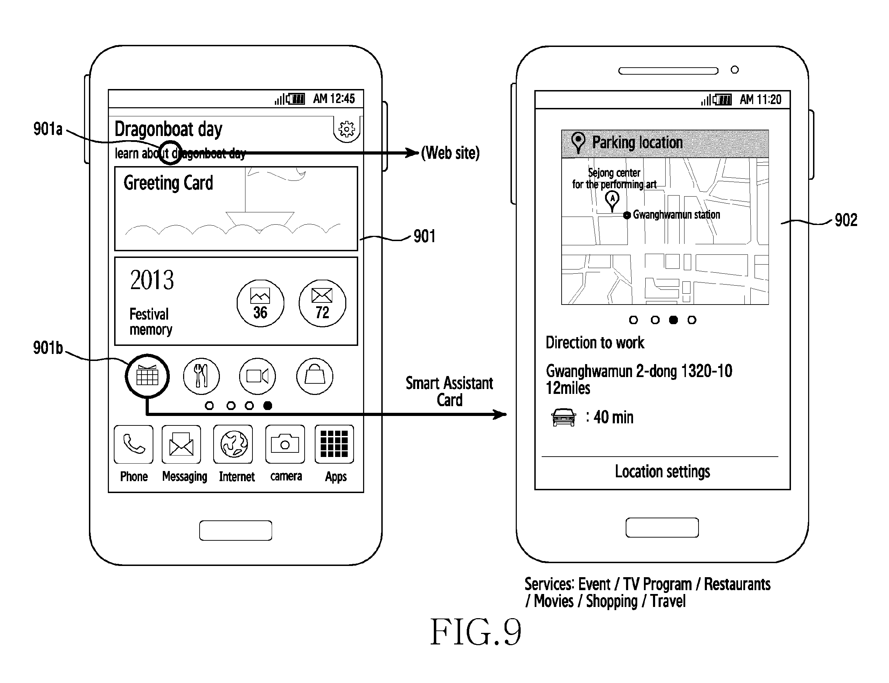

FIG. 9 is a diagram illustrating a process in which an electronic device provides supplementary information associated with a predetermined period or event, according to an embodiment of the present disclosure. The processor 120 displays, for example, a content associated with the Dragon Boat day as a learning page background screen 901.

In the learning page background screen 901, URL link information of a website that provides supplementary information associated with the Dragon Boat day may be displayed as an indicator 901 a that a user may touch. When the indicator 901 a is touched by a user, the processor 120 accesses the website and enables the user to readily search for the supplementary information associated with the Dragon Boat day.

A user selection icon 901b associated with a smart assistant card may be displayed in the learning page background screen 901. When the icon 901b is touched by the user, the processor 120 moves to a main screen of the smart assistant card that may select various services, for example, events, TV programs, restaurants, movies, shopping, travel, or the like, so as to enable the user to readily use the smart assistant card.

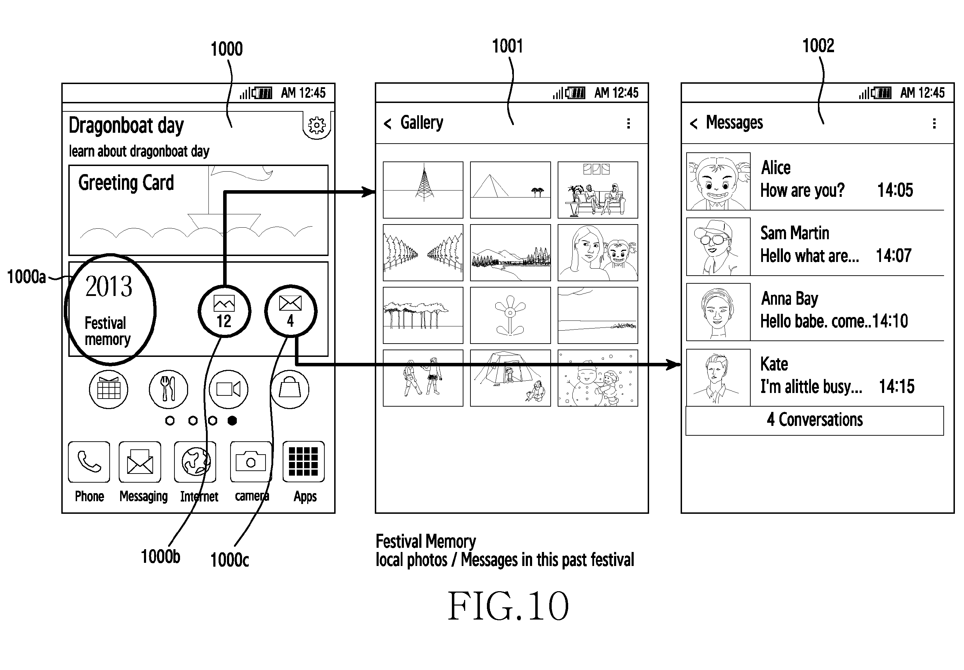

FIG. 10 is a diagram illustrating a process in which an electronic device provides past information associated with a predetermined period, according to an embodiment of the present disclosure. The processor 120 displays, for example, a content associated with the Dragon Boat day as a past page background screen 1000.

Past years 1000a desired by a user may be displayed in the past page background screen 1000 to enable the user to search for various information associated with a past year (for example, year 2013) associated with the Dragon Boat day, and a gallery search icon 1000b for searching for galleries stored in the past year and a text search icon 1000c for searching for text messages stored in the past year may be displayed.

When the user touches, for example, the gallery search icon 1000b, the processor 120 displays galleries of the past year (for example, year 2013) stored in the memory 130 of the electronic device as a gallery list screen 1001 that enables the user to select. When the user touches the text search icon 1000c, the processor 120 displays text messages of the past year (for example, year 2013) stored in the memory 130 of the electronic device as a text message list screen 1002 that enable the user to select.

The galleries and the text messages of the past year may be limited to, for example, the past one year, by taking into consideration a storage capacity of the memory 130. The galleries and the text messages of the past year may be stored in, for example, a content providing server that provides various supplementary services, and may be downloaded to the electronic device in response to a request from the processor 120.

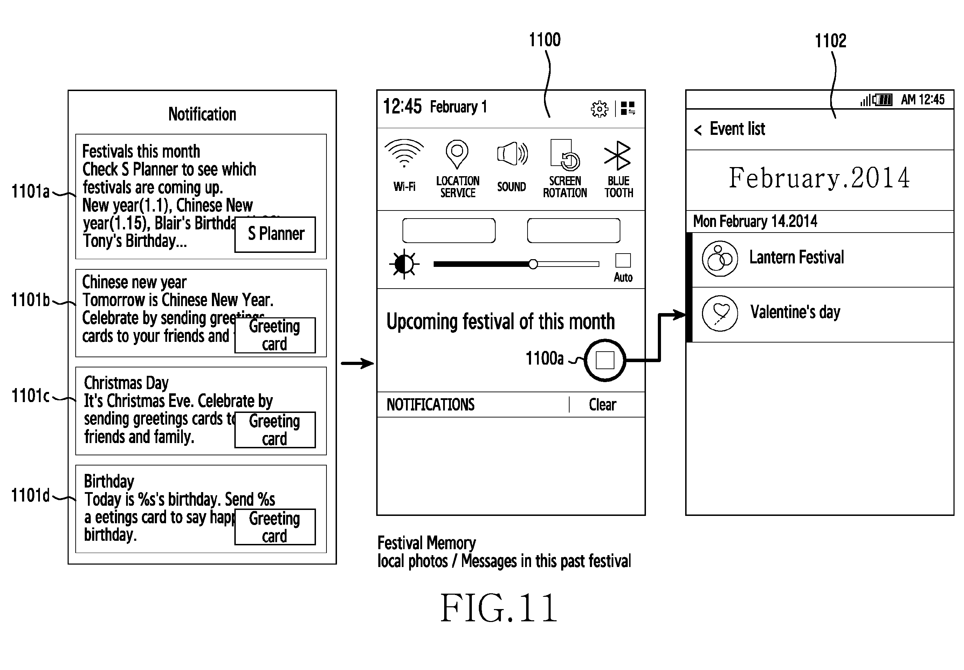

FIG. 11 is a diagram illustrating a process in which an electronic device reports, in advance, event information associated with a predetermined period, according to an embodiment of the present disclosure. The processor 120 reports, in advance, event information (for example, festival information) of an upcoming predetermine period through a notification background screen 1100 or the like.

For example, the processor 120 searches for event information of an upcoming predetermined period or event in this week or in this month, based on the present point in time, may determines a priority when a plurality of events overlap in the predetermined period, and displays the events based on the determined priority on the notification background screen 1100.

The processor 120 clears various information displayed on the notification background screen 1100 in response to a clear operation of the user and resets and display information associated with events based on the priority.

The event information may be, for example, an anniversary or event day 1101a that the user inputs through schedule management (for example, a schedule planner). Also, the event information may be a holiday in a nation where the electronic device is currently located, for example, Chinese New Year 1101b or Christmas 1101c, or may be the birthday 1101d of a user or the birthday of a family member or an acquaintance included in contact information of the electronic device.

An icon 1100a for searching for, for example, upcoming event information in this month may be displayed on the notification background screen 1100. When the user touches the icon 1100a, the processor 120 displays an event list screen 1102 that shows upcoming event information in this month.

A reduced image that represents a corresponding event and a guide message are associated and displayed in the event list screen 1102. When the user touches the reduced image or the guide message, a corresponding date, event contents, or the like may be additionally displayed as detailed information associated with the touched event.

Based on an icon selected by the user, the electronic device enters into a schedule managing (for example, a schedule planner) mode, to enable the user to readily search for or add a desired schedule.

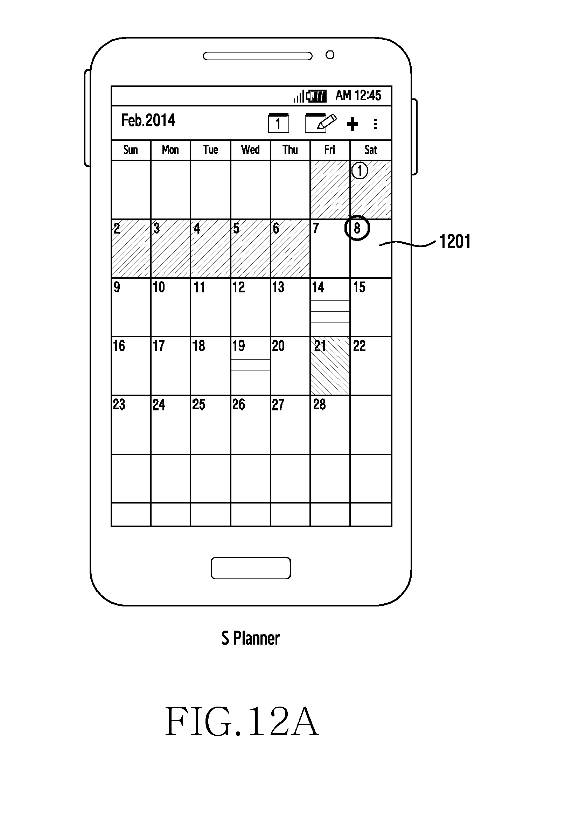

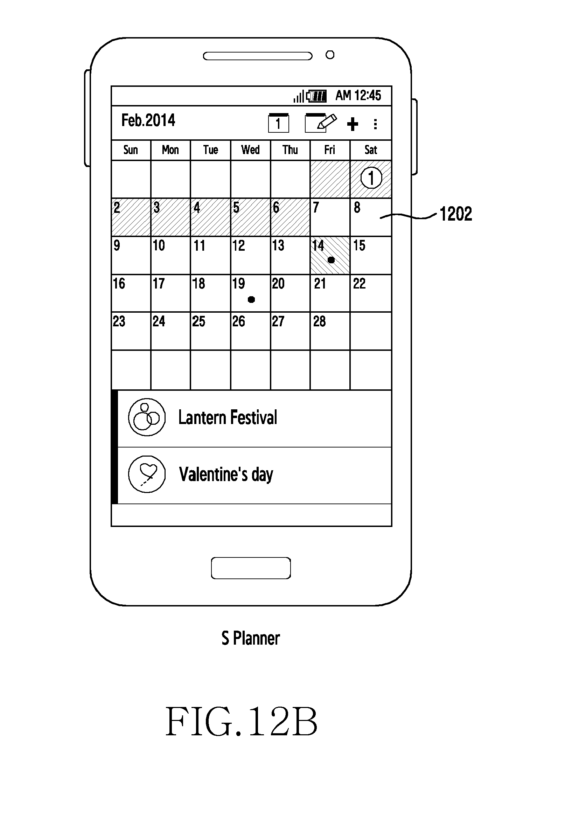

FIGs. 12A-12C are diagrams illustrating a process in which an electronic device displays event information associated with a predetermined period through a schedule planner, according to an embodiment of the present disclosure. When a monthly-basis schedule management screen 1201 is displayed in response to a request of a user (as in FIG. 12A), the processor 120 searches for event information of a predetermined period included in a corresponding month from the schedule management information, and displays a schedule management screen 1202 including the retrieved event information of the predetermined period (as in FIG. 12B).

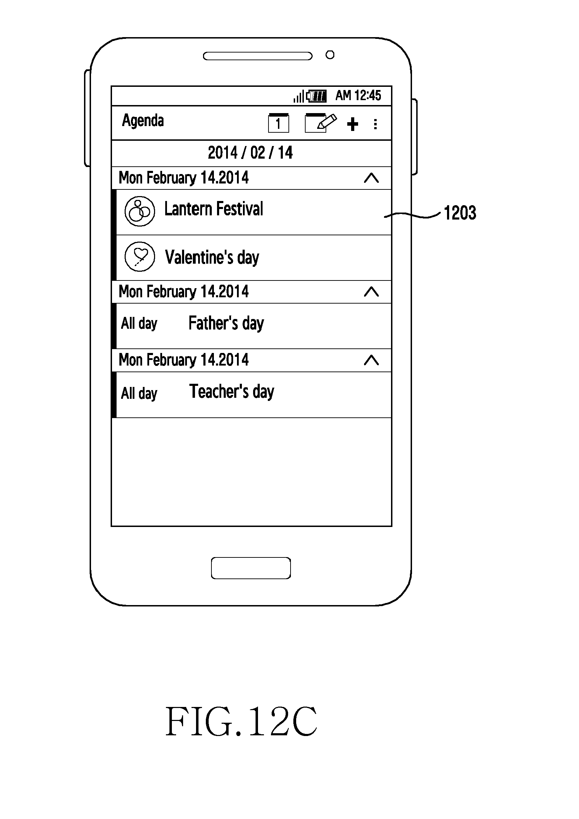

The processor 120 displays an agenda screen 1203 by listing up the event information in order of date or importance, in response to a request of the user (as in FIG. 12C).

The user may readily recognize an upcoming predetermined period and event, and the agenda may be variously classified on a monthly basis, a weekly basis, a yearly basis, or the like.

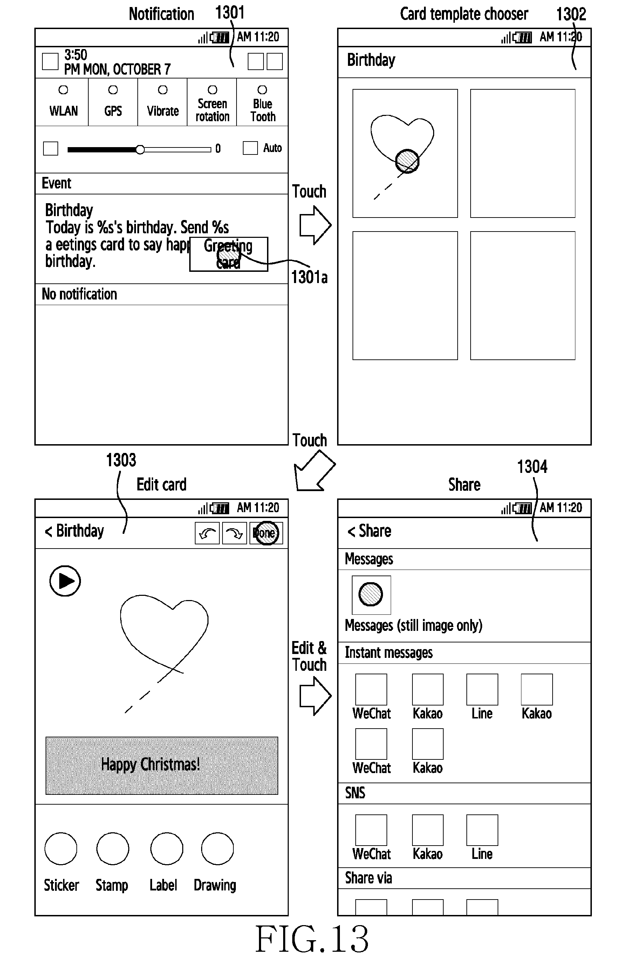

FIG. 13 is a diagram illustrating a process in which an electronic device writes and shares a celebration card, according to an embodiment of the present disclosure. The processor 120 displays a notification background screen indicating the birthday of a family member or acquaintance of a user, which is obtained from contact information of the electronic device, and an icon 1301a for enabling the user to write a celebration card may be displayed in the notification background screen 1301.

When the user touches the icon 1301a, the processor 120 displays a template screen 1302 where the user selects a birthday celebration card, and when the user touches a birthday celebration card, the processor 120 displays a card editing screen 1303 where the user edits the celebration card.

The processor 120 executes editing the celebration card, such as adding or replacing it with text or the like input by the user, through the card editing screen 1303, and in response to a request of the user, transmits and shares the edited celebration card by transmitting the same to a partner through a social network service (SNS) 1304 or a multimedia service (MMS).

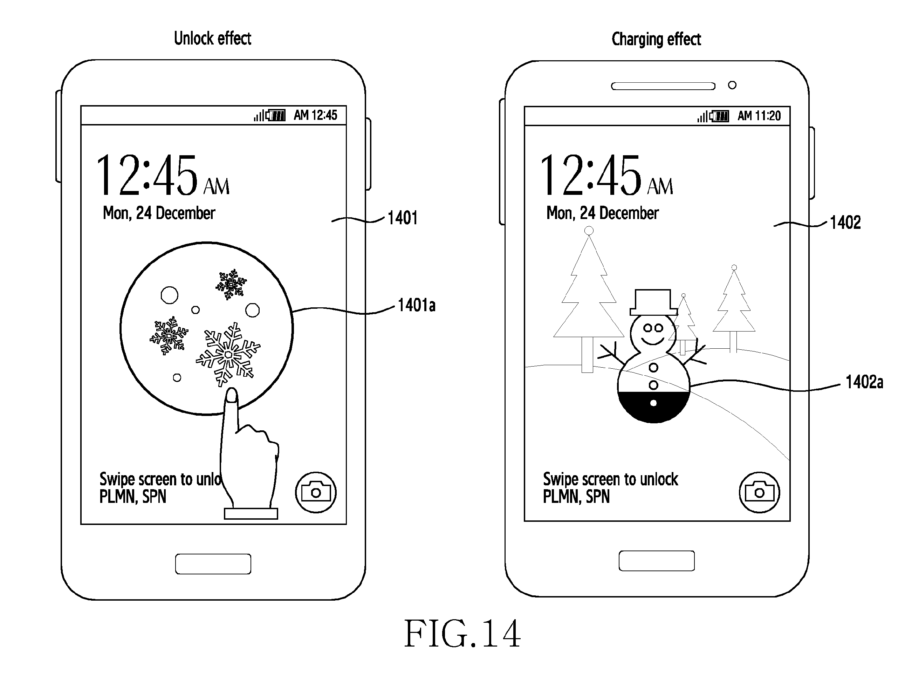

FIG. 14 is a diagram illustrating a process in which an electronic device displays a background screen by adding an effect to the background screen, according to an embodiment of the present disclosure. For example, when the present point in time corresponds to Christmas or winter, the processor 120 displays an effect of a snow flake image 1401 a representing Christmas or winter, as an effect associated with a user touch on a lock screen background screen 1401.

Also, as an effect associated with a charging state, an effect of a snowman 1402a representing Christmas or winter may be displayed on a lock screen background screen 1402.

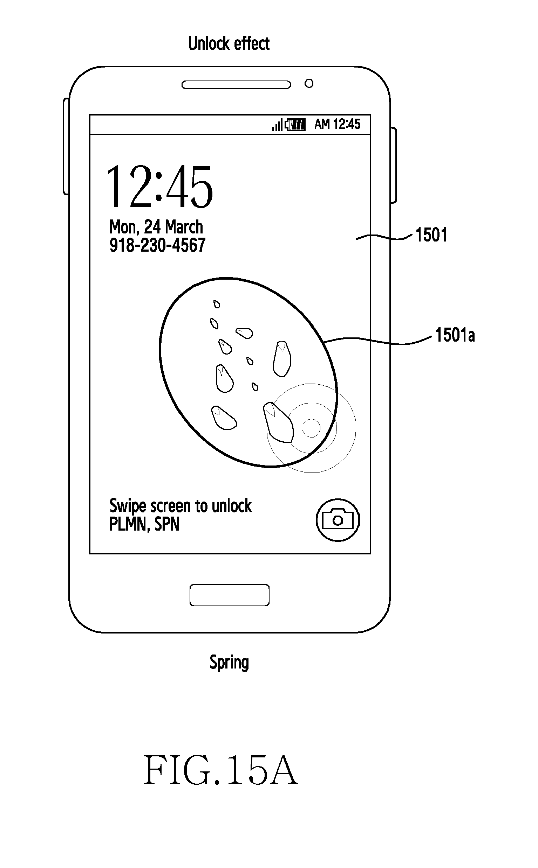

FIGs. 15A-15D are diagrams illustrating a process in which an electronic device displays a touch state by adding a season-based effect to a background screen, according to an embodiment of the present disclosure. For example, when the present point in time corresponds to spring, the processor 120 displays an effect of a flower petal 1501a representing spring, as an effect associated with a user touch on a lock screen background screen 1501 (as in FIG. 15A).

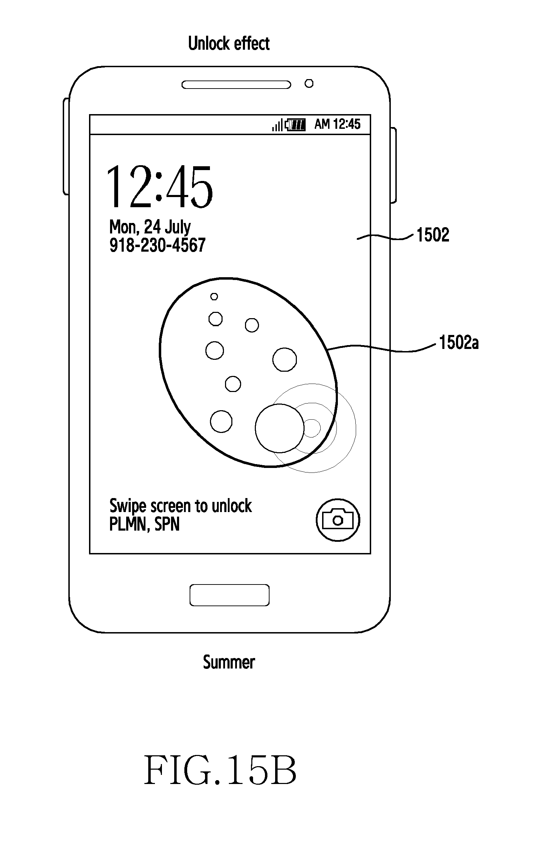

When the present point in time corresponds to summer, an effect of a water drop 1502a representing summer may be displayed as an effect associated with a user touch on a lock screen background screen 1502 (as in FIG. 15B).

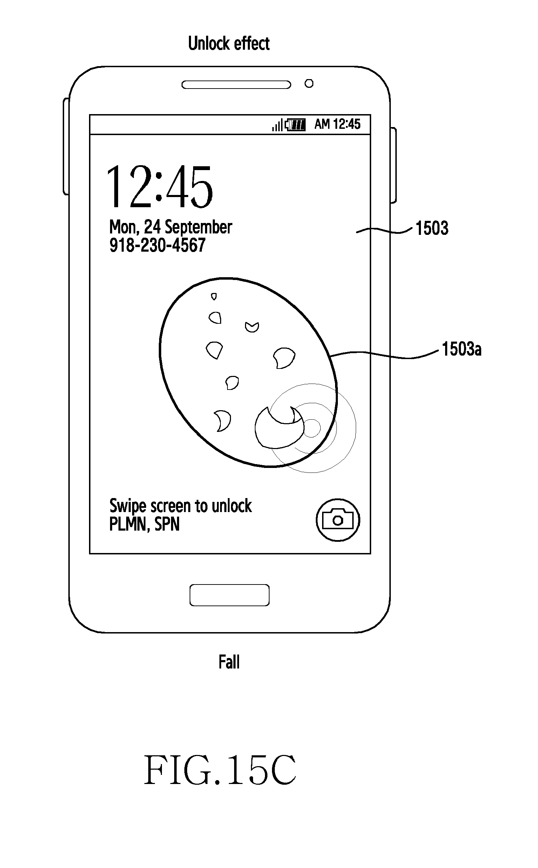

When the present point in time corresponds to fall, an effect of a dead leaf 1503a representing fall may be displayed as an effect associated with a user touch on a lock screen background screen 1503 (as in FIG. 15C).

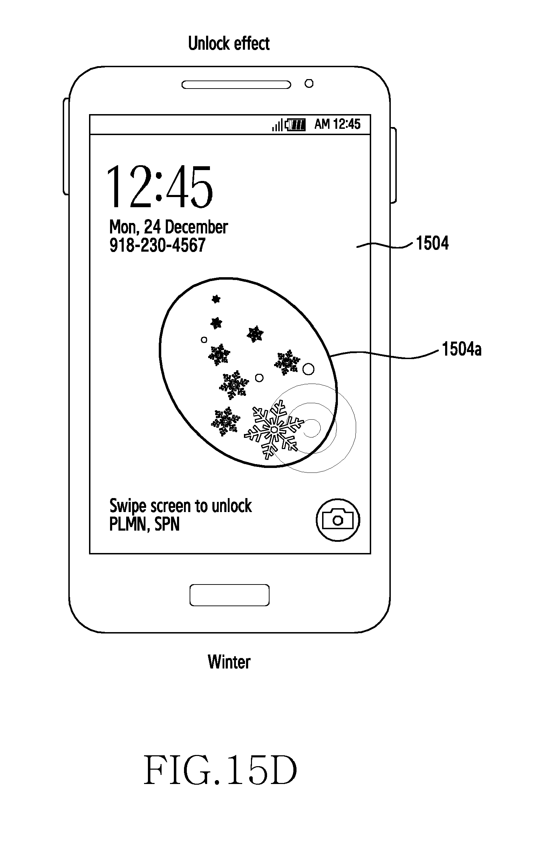

When the present point in time corresponds to winter, a lock screen background screen 1504 representing winter is displayed, and an effect of a snow flake 1504a representing winter may be displayed as an effect associated with a user touch on the lock screen background screen 1504 (as in FIG. 15D).

The processor 120 outputs various sound effects together with the effect. For example, the processor 120 outputs birdsong representing spring as an effect, together with the effect of the flower petal 1501a, and outputs the sound of cicadas representing summer as a sound effect, together with the effect of the water drop 1502a.

Also, the processor 120 outputs the sound of footsteps on dead leaves representing fall as a sound effect, together with the effect of the dead leaf 1503a, and outputs the sound of winter wind, together with the effect of the effect of the snow flake 1504a.

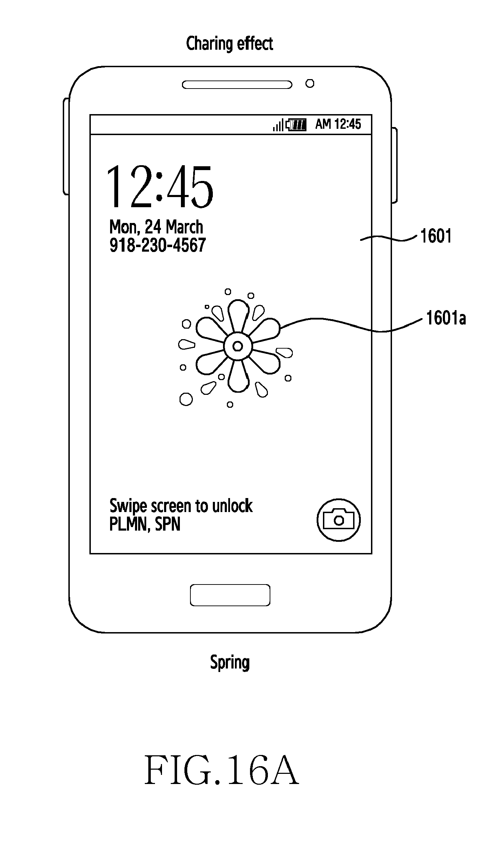

FIGs. 16A-16D are diagrams illustrating a process in which an electronic device displays a charging state by adding a season-based effect to a background screen, according an embodiment of the present disclosure. For example, when the present point in time corresponds to spring, the processor 120 may display an effect of a flower petal 1601a representing spring, as an effect associated with a charging state on a lock screen background screen 1601 (as in FIG. 16A).

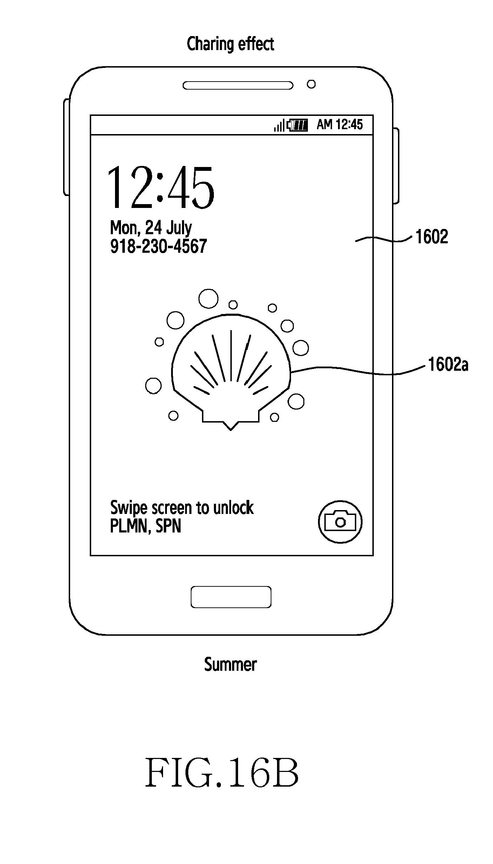

Also, when the present point in time corresponds to summer, the processor 120 displays an effect of a clam 1602a representing summer as an effect indicating a charging state on a lock screen background screen 1602 (as in FIG. 16B).

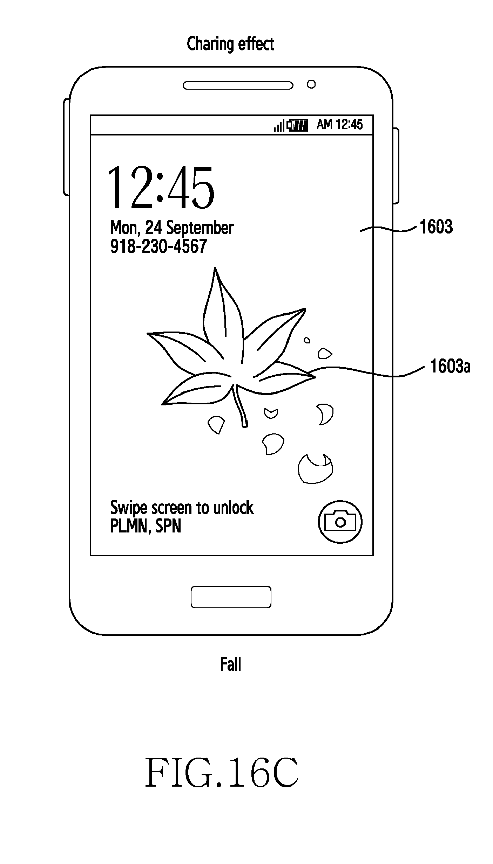

Also, when the present point in time corresponds to fall, the processor 120 displays an effect of a maple leaf 1603a representing fall as an effect indicating a charging state on a lock screen background screen 1603 (as in FIG. 16C).

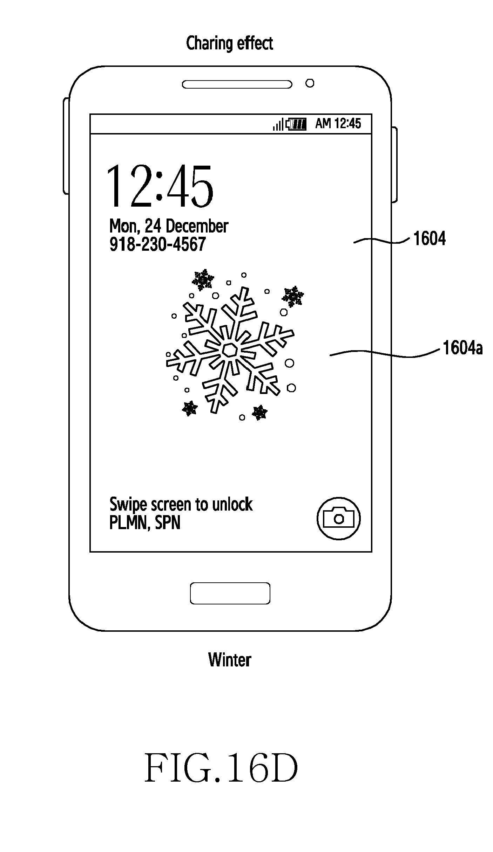

Also, when the present point in time corresponds to winter, the processor 120 displays a lock screen background screen 1604 representing winter, and displays an effect of a snow flake image 1604a representing winter as an effect indicating a charging state on the lock screen background screen 1604 (as in FIG. 16D). Further, the processor 120 outputs various sound effects together with the effect.

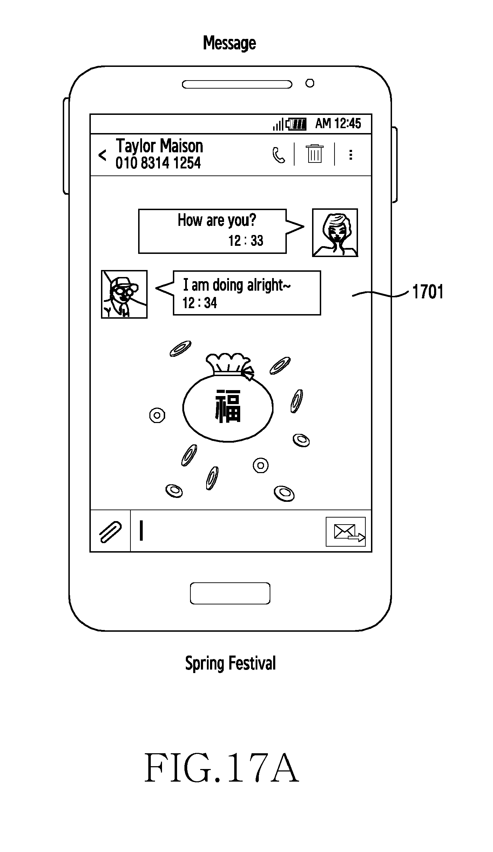

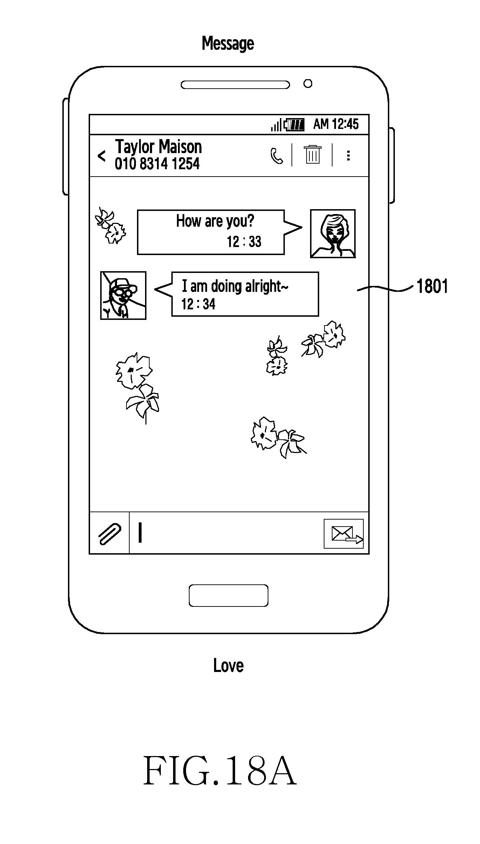

FIGs. 17A-17D and FIGs. 18A-18D are diagrams illustrating message background screens displayed in an electronic device, according to an embodiment of the present disclosure. When the present point in time corresponds to a predetermined period, the processor 120 displays various message background screens associated with the predetermined period, as a message background screen where text messages are displayed.

For example, when the predetermined period corresponds to a spring festival, a lucky bag and coins representing the spring festival may be displayed as an animation image, on a message background screen 1701 (as in FIG. 17A).

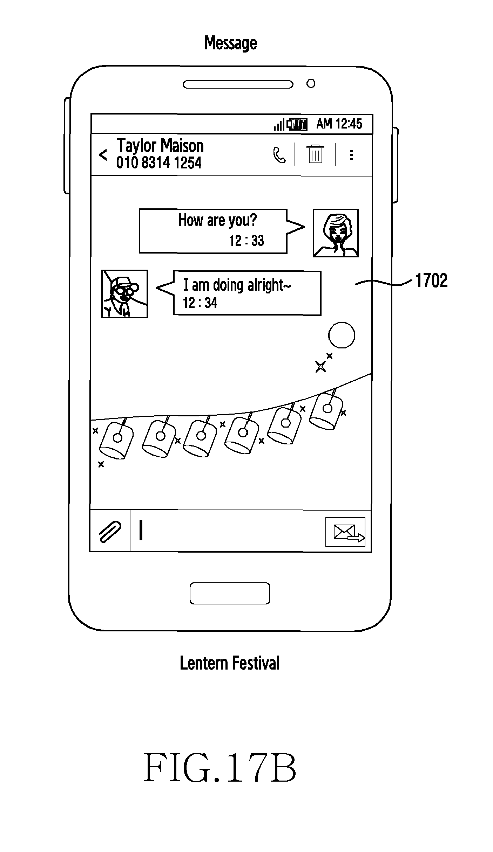

When the predetermined period corresponds to the lantern festival, a plurality of lanterns representing the lantern festival may be displayed as an animation image, on a message background screen 1702 (as in FIG. 17B).

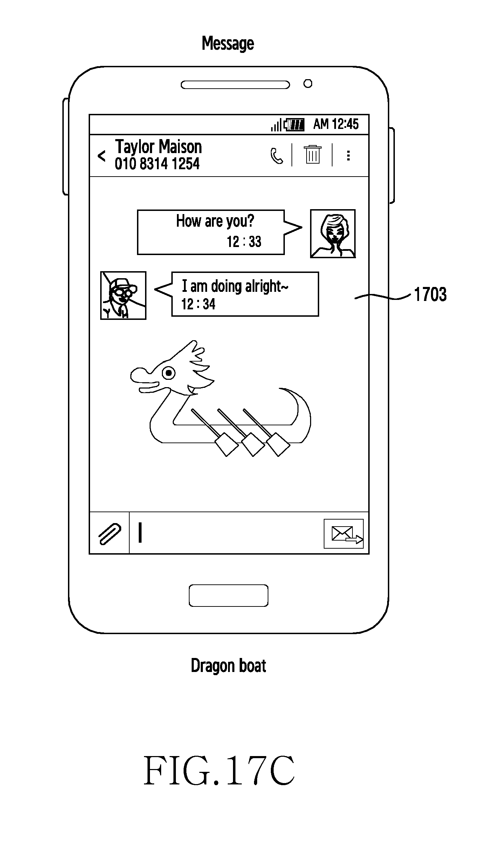

When the predetermined period corresponds to the Dragon Boat day, a dragon image representing the Dragon Boat day may be displayed as an animation image, on a message background screen 1703 (as in FIG. 17C).

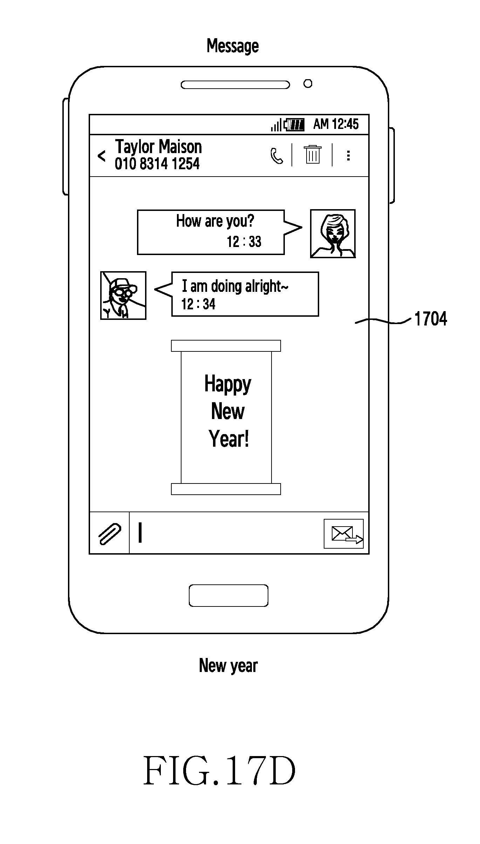

When the predetermined period corresponds to the new year, a flag of a celebration message representing the new year may be displayed as an animation image, on a message background screen 1704 (as in FIG. 17D).

When the predetermined period corresponds to an anniversary associated with love such as wedding anniversary or the like, carnations representing love may be displayed as an animation image, on a message background screen 1801 (as in FIG. 18A).

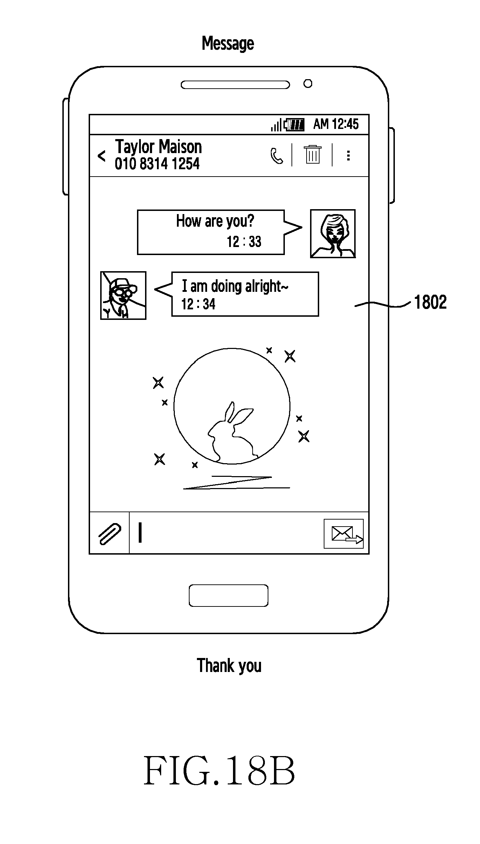

When the predetermined period corresponds to an anniversary associated with thanks (thank you), such as Thanksgiving or the like, images of the moon, rabbits, or the like representing thanks may be displayed as an animation image, on a message background screen 1802 (as in FIG. 18B).

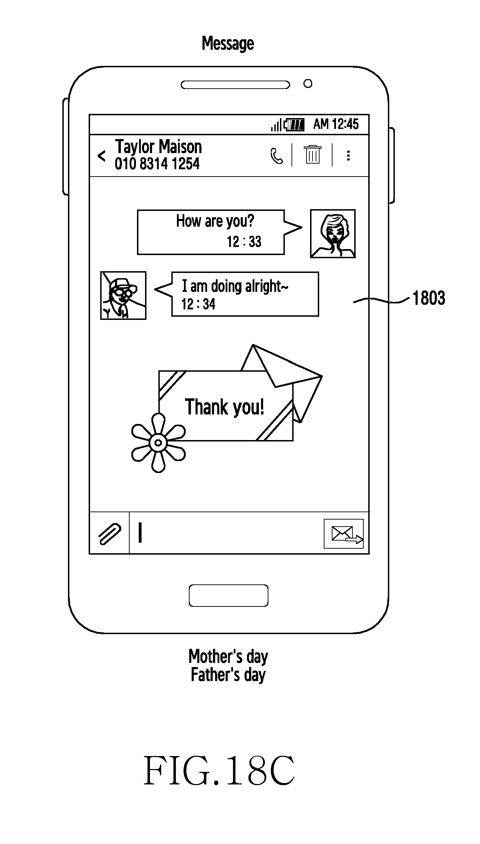

When the predetermined period corresponds to mother's day or father's day, a thank-you letter for mother or father may be displayed as an animation image, on a message background screen 1803 (as in FIG. 18C).

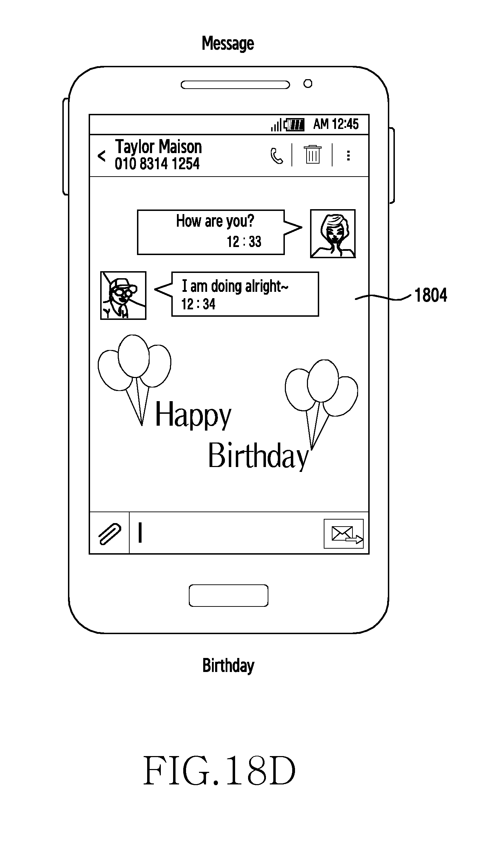

When the predetermined period corresponds to a birthday, messages celebrating the birthday may be displayed as an animation image, on a message background screen 1804 (as in FIG. 18D). Here, the various animation images displayed in the message background screen may be replaced with a still image, a video, or the like, and may be output together with the sound effect.

As described with reference to FIG. 5, the processor 120 executes text recognition with respect to a text message transmitted or received through a messenger, and may additionally display an effect image 503a such as a birthday celebration message or the like on the message background screen.

Here, the text recognition may be executed only in association with the predetermined period, and may be executed only to N, where N is an integer value (for example, N=2), text messages which are most recently transmitted or received from among the transmitted or received messages.

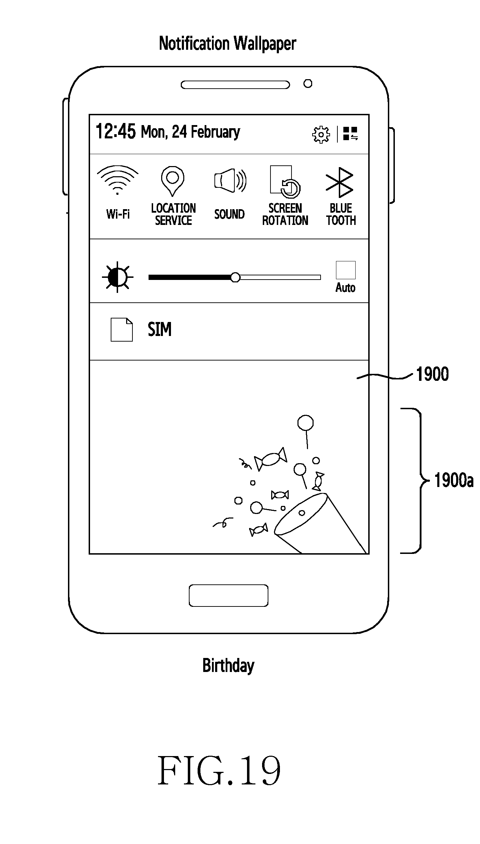

FIG. 19 is a diagram illustrating a screen in which a birthday celebration animation image is displayed in a quick panel in an electronic device, according to an embodiment of the present disclosure. For example, when the present point in time corresponds to a predetermined period corresponding to the birthday of a user, the processor 120 displays an animation image 1900a indicating celebration of a birthday, on a quick panel 1900 where a notification background screen is displayed.

For example, the animation image may be an animation image of setting off firecrackers for celebration of a birthday and may be output together with audio of a birthday celebration song, and the animation image may be output at a point in time when a quick panel is displayed for the first time during the birthday of the user.

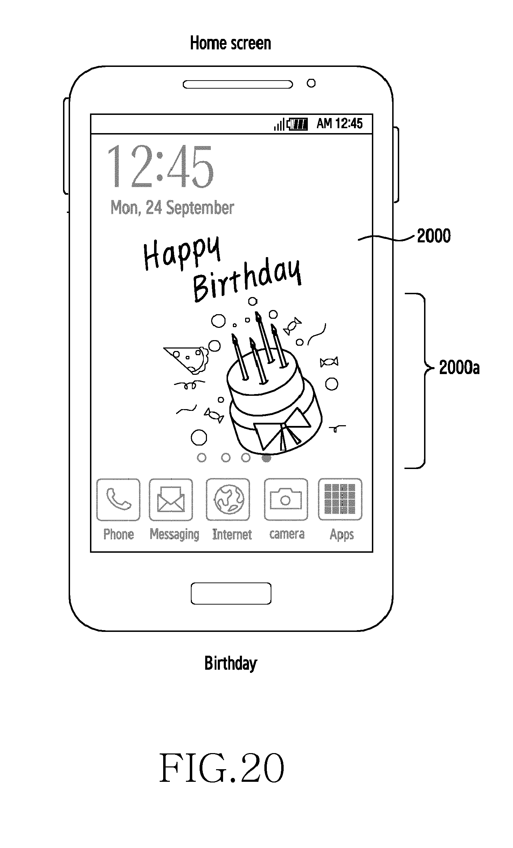

FIG. 20 is a diagram illustrating a screen in which a birthday celebration animation image is displayed on a home screen in an electronic device, according to an embodiment of the present disclosure. For example, when the present point in time corresponds to a predetermined period corresponding to the birthday of a user, the processor 120 displays an animation image 2000a expressing the celebration of a birthday on a home screen 2000.

For example, the animation image may be various animation images of a cake, candles, and setting off firecrackers, which express celebration of a birthday, and may be output together with audio of a birthday celebration song, and the animation image may be output once at a point in time when a home screen is displayed for the first time during the birthday of the user.

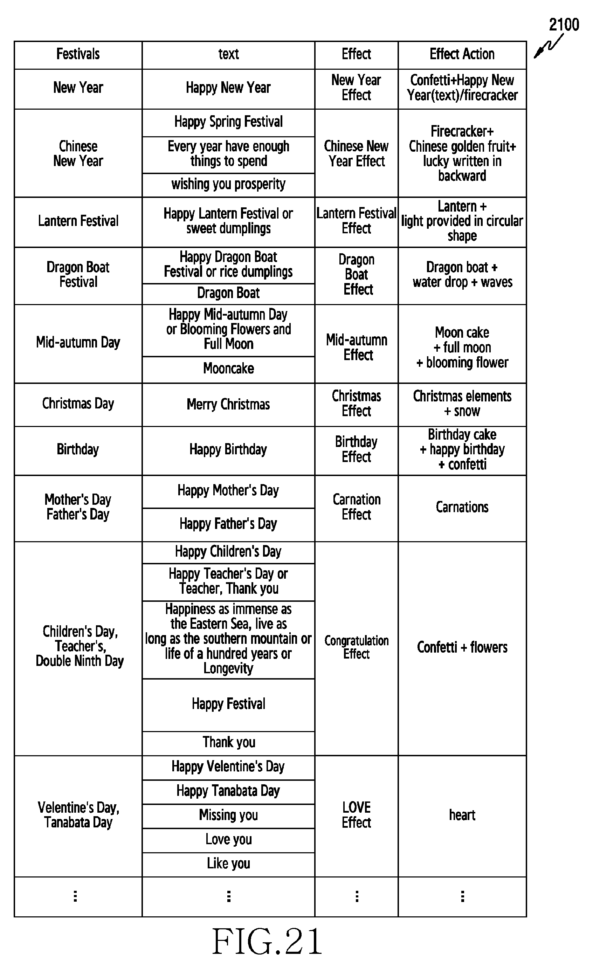

FIG. 21 is a diagram illustrating a greeting recognition function list recognizable by an electronic device, according to an embodiment of the present disclosure. For example, a greeting recognition function list 2100 may be formed of fields set in advance to be recognized by the processor 120.

The greeting recognition function list 2100 may include a festival field indicating an event or the like corresponding to a predetermined period and a text field indicating a celebration message or the like to be displayed in the predetermined period, and English text, Chinese text, or text of various languages may be written in the text field.

The greeting recognition function list may include an effect field indicating an effect to be displayed in the predetermined period, and an effect action field indicating a detailed operation or the like to implement the effect. Here, the effect action may be referred to as an effect metaphor field, and the greeting recognition function list may be called another name, and may be updated through an interface with a server connected over a network.

When the present point in time corresponds to, for example, the first day of January, the processor 120 searches for a festival field, a text field, an effect field, and an effect action field corresponding to the New Year, from the greeting recognition function list 2100.

The processor 120 displays a celebration message for the New Year and displays an animation image providing an effect of setting off confetti, firecrackers, or the like, based on the information recorded in the fields.

The aforementioned methods may be implemented in software, as such a non-transitory computer-readable storage medium (or storage medium readable by a computer) storing at least one program (or programming module) is also provided. The software may, for example, be implemented by instructions stored in a non-transitory computer-readable storage medium in the form of a programming module. The at least one program may include instructions that cause the electronic device to perform the methods described herein. When the command is executed by one or more processors (for example, the processor 120), the one or more processors may execute a function corresponding to the command.

The non-transitory computer-readable storage medium may, for example, be the memory 230. At least a part of the programming module may, for example, be implemented (e.g., executed) by the processor 120. At least a part of the programming module may, for example, include a module, a program, a routine, a set of instructions, or a process for performing at least one function.

The non-transitory computer-readable storage medium may include magnetic media such as a hard disc, a floppy disc, and a magnetic tape, optical media such as a Compact Disc Read Only Memory (CD-ROM) and a DVD, magneto-optical media such as a floptical disk, a hardware device specifically configured to store and execute program instructions (e.g., programming module), such as a ROM, a Random Access Memory (RAM), and a flash memory, an Electrically Erasable Programmable ROM (EEPROM), a magnetic disc storage device, any other type of optical storage device, and a magnetic cassette.

Alternatively, any combination of some or all of the storage media may form a memory in which the program is stored. Further, a plurality of such memories may be included in the electronic device. In addition, the program instructions may include high class language codes, which can be executed in a computer by using an interpreter, as well as machine codes made by a compiler.

The electronic device 101 may include a non-transitory computer-readable storage medium having a program stored therein to perform an operation for identifying a call inability state of the counterpart electronic device having received the call and an operation for transmitting the call wish message to the counterpart electronic device.

In addition, the program may be stored in an attachable storage device capable of accessing the electronic device through a communication network such as the Internet, an intranet, a LAN, a WLAN, a SAN, or any combination thereof. Such a storage device may access the electronic device via an external port. Further, a separate storage device on the communication network may access a portable electronic device. Any of the hardware devices as described above may be configured to work as one or more software modules in order to perform the operations described, and vice versa.

Any of the modules or programming modules may include at least one of the above described elements, exclude some of the elements, or further include other additional elements. The operations performed by the modules, programming module, or other elements may be executed in a sequential, parallel, repetitive, or heuristic manner. Further, some operations may be executed according to another order or may be omitted, or other operations may be added.

While the present disclosure has been shown and described with reference to certain embodiments thereof, it should be understood by those skilled in the art that many variations and modifications of the method and apparatus described herein will still fall within the spirit and scope of the present disclosure as defined in the appended claims and their equivalents.

## Claims

1. An operating method of an electronic device, the method comprising:
determining whether a present point in time corresponds to a predetermined period or event;
obtaining a content associated with the predetermined period or event; and
providing the content as at least a part of a user interface displayed on a user interface screen of the electronic device.

2. The method of claim 1, wherein the obtaining the content comprises obtaining the content based on at least one event from among a user touch event, a charging state change event, and a text recognition event, wherein the content includes an animation providing an effect corresponding to the event.

3. The method of claim 1, wherein the predetermined period or event is at least one of a national or public holiday of a nation where the electronic device is located, an anniversary designated by a user of the electronic device, and an anniversary of a person included in contact information of the electronic device, wherein the predetermined period or event is designated by one of a user input of the electronic device and based on at least one of calendar information, schedule information, and contact information included in the electronic device.

4. The method of claim 1, wherein the content includes at least one of a still image, an animation image, and a video to be displayed on a user interface screen.

5. The method of claim 1, wherein obtaining the content comprises one of searching for a content associated with the predetermined period or event in the electronic device and downloading the content from a server connected to the electronic device over a network.

6. The method of claim 1, further comprising displaying the content as at least one of a lock screen background screen, a message background screen, a notification background screen, and a widget background screen, which is a user interface screen.

7. The method of claim 6, wherein at least one of the lock screen background screen, the message background screen, the notification background screen, and the widget background screen is displayed together with at least one of audio and an effect image included in the content.

8. An electronic device, comprising:
a display module; and
a processor configured to control the display module, obtain a content associated with a predetermined period or event when the present point in time corresponds to the predetermined period or event, and provide the content as at least a part of a user interface displayed on a user interface screen of the electronic device.

9. The electronic device of claim 8, wherein the processor obtains the content based on at least one event from among a user touch event, a charging state change event, and a text recognition event, where the content includes an animation providing an effect corresponding to the event.

10. The electronic device of claim 8, wherein the predetermined period or event is at least one of a national or public holiday of a nation where the electronic device is located, an anniversary designated by a user of the electronic device, and an anniversary of a person included in contact information of the electronic device, where the predetermined period or event is designated by one of a user input of the electronic device and obtained based on at least one of calendar information, schedule information, and contact information included in the electronic device.

11. The electronic device of claim 8, wherein the content includes at least one of a still image, an animation image, and a video to be displayed on a user interface screen.

12. The electronic device of claim 8, wherein the processor obtains a content associated with the predetermined period or event by one of searching for the content in the electronic device and downloading the content from a server connected to the electronic device over a network.

13. The electronic device of claim 8, the processor is further configured to display the content as at least one of a lock screen background screen, a message background screen, a notification background screen, and a widget background screen, which is a user interface screen.

14. The electronic device of claim 12, wherein at least one of the lock screen background screen, the message background screen, the notification background screen, and the widget background screen is displayed together with at least one of audio and an effect image included in the content.

15. A non-transitory computer readable storage medium that stores a program for implementing a method including:
determining whether a present point in time corresponds to a predetermined period or event;
obtaining a content associated with the predetermined period or event; and
providing the content as at least a part of a user interface displayed on a user interface screen of the electronic device.
